# EUROPÄISCHE PATENTSCHRIFT

(11) **EP 2 242 802 B1**
(45) Veröffentlichungstag und Bekanntmachung des Hinweises auf die Patenterteilung: **07.10.2015**
(21) Anmeldenummer: 09708032.9
(22) Anmeldetag: 06.02.2009
(51) Int. Cl.: C08L 77/00, C08L 77/02, C08L 21/00, C08J 3/12, C08L 9/10, C08L 13/02, C08L 21/02, C08L 9/04

(54) **HYDROLYSEBESTÄNDIGE POLYAMID-ELASTOMER-MISCHUNGEN, HIERAUS HERGESTELLTE FORMTEILE SOWIE DEREN VERWENDUNG**
HYDROLYSIS-RESISTANT POLYAMIDE-ELASTOMER MIXTURES, MOLDED PARTS PRODUCED THEREFROM AND USE THEREOF
MÉLANGES POLYAMIDE-ÉLASTOMÈRE RÉSISTANTS À L'HYDROLYSE, ÉLÉMENTS MOULÉS FABRIQUÉS À BASE DE CES MÉLANGES ET LEUR UTILISATION

(30) Priorität: 08.02.2008 DE 102008008098; 25.09.2008 DE 102008042368
(43) Veröffentlichungstag der Anmeldung: 27.10.2010
(73) Patentinhaber: EMS-PATENT AG, 7013 Domat/Ems (CH); Rhein Chemie Rheinau GmbH, 68219 Mannheim (DE); LANXESS Deutschland GmbH, 50569 Köln (DE)
(72) Erfinder: HOFFMANN, Botho, CH-7013 Domat/Ems (CH); STÖPPELMANN, Georg, CH-7013 Domat/Ems (CH); SCHUSTER, Robert Hans, 30519 Hannover (DE); ROZIN, Clara Antonia, 73054 Eislingen (DE); OBRECHT, Werner, 47447 Moers (DE); FRUEH, Thomas, 67112 Mutterstadt (DE)
(74) Vertreter: Gille Hrabal
(86) Internationale Anmeldenummer: PCT/EP2009/051398
(87) Internationale Veröffentlichungsnummer: WO 2009/098305

(56) Entgegenhaltungen:
- EP-A- 0 234 393
- EP-A- 0 259 097
- EP-A- 1 262 510
- EP-A- 1 621 571
- WO-A-2007/093565
- GB-A- 2 208 868
- DESMOND THREADINGHAM, WERNER OBRECHT, JEAN-PIERRE LAMBERT: "Rubber, 3. Synthetic" ULLMANN'S ENCYCLOPEDIA OF INDUSTRIAL CHEMISTRY, [Online] 2004, Seiten 1-146, XP002552203 Gefunden im Internet: URL:http://mrw.interscience.wiley.com/emrw /9783527306732/ueic/article/a23_239/curren t/pdf> [gefunden am 2009-10-26]

## Beschreibung

Die Erfindung betrifft Polyamid-Elastomer-Mischungen mit verbesserter Hydrolysebeständigkeit. Hierbei liegt das Elastomer insbesondere in Form eines Mikrogels vor. Die erfindungsgemäßen Polyamid-Elastomer-Mischungen lassen sich zu Formteilen verarbeiten, die zum Beispiel im Automobilbereich, insbesondere als medienführende Leitungen, Verwendung finden.

Für die Herstellung medienführender Leitungen im Automobilbereich sind Werkstoffe mit mittlerer bis hoher Flexibilität erforderlich. Flexible Polyamide, die keine Weichmacher enthalten, können grundsätzlich auf verschiedenen Wegen hergestellt werden.

Ein erstes Verfahren zur Flexibilisierung von Polyamid beruht auf dem Einbau von Polyether- oder Polyestersegmenten.

Eine zweite Variante beruht auf einem Compoundierverfahren, bei dem Polyamide durch Zugabe von Ethylen/ Propylen- oder Ethylen/Butylen-Copolymeren flexibel eingestellt werden.

Beide Varianten, d.h. sowohl das Polymerisationsverfahren als auch das Compoundierverfahren haben aber den Nachteil, dass die Produkte eine reduzierte Chemikalienbeständigkeit aufweisen sowie eine erhöhte Quellung in Kraftstoffen und Ölen zeigen. Weiterhin haben diese Produkte den Nachteil einer schlechten Hydrolysebeständigkeit bei erhöhten Temperaturen.

Ein weiteres Verfahren nutzt die flexibilisierende Wirkung von vernetzten Elastomerphasen. So beschreibt die DE 103 45 043 A1 Zusammensetzungen aus einem Thermoplasten und nicht durch energiereiche Strahlung vernetzten Mikrogelen, die eine geringe Ölquellung aufweisen. Das hier eingesetzte Mikrogel wird vor dem Mischen mit den Thermoplasten separat hergestellt, d.h. auch vernetzt. Die Vernetzung erfolgt entweder direkt bei der Polymerisation durch Wahl geeigneter Monomere oder nach der Polymerisation mit Hilfe von Peroxiden.

Die GB2208868 A beschreibt Zusammensetzungen enthaltend ein Polyamid und ein Nitrilgruppen enthaltendes Elastomer, welches im Polyamidharz in Form von vernetzten Partikeln dispergiert vorliegt. Die Dokumente EP0234393 A2, EP0259097 A2, EP1621571 A1 und EP1262510 A1 offenbaren die Verwendung von Elastomeren, die durch Emulsionspolymerisation und anschließende Sprühtrocknung erhalten worden sind, als Schlagzähmodifikatoren in Polyamidzusammensetzungen.

Ausgehend hiervon war es Aufgabe der vorliegenden Erfindung, auf Polyamid basierende Werkstoffe bereitzustellen, die eine gute Flexibilität und gleichzeitig auch gute Eigenschaften bezüglich der Hydrolysebeständigkeit und der Ölquellung aufweisen. Diese Aufgabe wird durch die Polyamid-Elastomer-Mischung mit den Merkmalen des Anspruchs 1 und die daraus hergestellten Formteile mit den Merkmalen des Anspruchs 26 gelöst. Die weiteren abhängigen Ansprüche zeigen vorteilhafte Ausführungsformen. In Anspruch 28 wird eine erfindungsgemäße Verwendung genannt.

Erfindungsgemäß wird eine Polyamid-Elastomer-Mischung bereitgestellt, die enthält:
a) 30 bis 95 Gew.-% mindestens eines teilkristallinen Polyamids mit einer Lösungsviskosität größer oder gleich 1,75 (gemessen in m-Kresol-Lösung, 0,5 Gew.-% bei 20°C) nach DIN EN ISO-Norm 307,
b) 5 bis 50 Gew.-% mindestens eines Elastomers, das durch Emulsionspolymerisation und anschließende Sprühtrocknung des bei der Emulsionspolymerisation erhaltenen Latex hergestellt wird,
c) gegebenenfalls 0 bis 20 Gew.-% ein oder mehrere Polyamide mit einer Lösungsviskosität kleiner 1,75 (gemessen in m-Kresol-Lösung, 0,5 Gew.-% bei 20°C) nach DIN EN ISO-Norm 307,
wobei sich die vorstehend genannten Gew.-%-Angaben auf die Gesamtmenge der Komponenten (a) bis (c) beziehen,
und, bezogen auf 100 Gew.-Teile der Komponenten (a) bis (c), von 0 bis 100 Gewichtsteile eines oder mehrere Additive, dadurch gekennzeichnet, dass das Elastomer b) wie in Anspruch 1 definiert hergestellt wird.

Das durch Sprühtrocknung des bei der Emulsionspolymerisation erhaltenen Latex hergestellte Elastomer b) weist bevorzugt einen mittleren Partikeldurchmesser im Bereich von 2 µm bis 300 µm, bevorzugt von 2 µm bis 200 µm, insbesondere im Bereich von 5 bis 150 µm auf. Der mittlere Teilchendurchmesser kann dabei beispielsweise aus der Partikelgrößenverteilung als d₅₀-Wert bestimmt durch Laserbeugung, insbesondere auch im Latex, beispielsweise mit einem Mastersizer 2000, bestimmt werden. Besonders bevorzugt liegen die Durchmesser aller Partikel im Bereich von 2 µm bis 300 µm, bevorzugt von 2 µm bis 200 µm, insbesondere im Bereich von 5 bis 150 µm. Dies kann z.B. durch Begutachtung einer elektronenmikroskopischen Aufnahme festgestellt werden.

Überraschenderweise konnte gezeigt werden, dass die erfindungsgemäßen Polyamid-Elastomer-Mischungen eine hohe Hydrolysebeständigkeit aufweisen. Dies konnte dadurch belegt werden, dass aus der Polyamid-Elastomer-Mischung hergestellte Zugstäbe in einem Wasser/Glykol-(60:40)-Gemisch bei 135°C und einer Lagerungsdauer von 500 h eine verbleibende Reißdehnung von mindestens 20 % (relativ zum Ausgangswert) aufwiesen.

Vorzugsweise ist das teilkristalline Polyamid (a) ausgewählt aus der Gruppe bestehend aus den Polyamiden PA46, PA6, PA66, PA69, PA610, PA612, PA614, PA616, PA618, PA11, PA12, PA1010, PA1012, PA1212, PA MXD6, PA MXD6/MXDI, PA9T, PA10T, PA12T, PA 6T/6I, PA 6T/66, PA 6T/10T, deren Copolyamide sowie deren Blends und Polyamid-Block-copolymeren mit Weichsegmenten auf Basis von Polyestern, Polyethern, Polysiloxanen oder Polyolefinen, wobei der Polyamidanteil der Polyamid-Blockcopolymeren mindestens 40 Gew.-% beträgt, und deren Blends.

Insbesondere ist das teilkristalline Polyamid (a) ausgewählt aus der Gruppe der lactamhaltigen Homopolyamide PA6 und PA12 und den Copolyamiden PA6/12, PAX/66, PAX/69, PAX/610, PAX/612, PAX/614, PAX/618, PA6T/X, PA6T/6I/X, PA6T/66/X, wobei der Lactamgehalt der Copolyamide mindestens 20 Gew.-% beträgt und X=6 oder 12 ist, und Polyamid-Block-copolymeren mit Weichsegmenten auf Basis von Polyestern, Polyethern, Polysiloxanen oder Polyolefinen, wobei der Lactamgehalt der Polyamid-Blockcopolymeren mindestens 40 Gew.-% beträgt, und deren Blends.

Erfindungsgemäss sind bevorzugt 40 bis 85 Gew.-%, besonders bevorzugt 50 bis 78 Gew.-% der Komponente (a), bezogen auf die Summe der Komponenten (a) bis (c), in der Polyamid-Elastomer-Mischung enthalten.

Der Ausdruck "teilkristallin" im Zusammenhang mit dem Polyamid (a) bedeutet im Rahmen der Erfindung ein Polymer, dass gleichzeitig amorphe und kristalline Bereiche aufweist (vgl. z.B. Hans Batzer: "Polymere Werkstoffe in drei Bänden", Band I, Kap. 4, S. 253 ff und Kap. 5, S. 277 ff).

Das Polyamid (a) weist vorzugsweise eine Aminoendgruppenkonzentration im Bereich von 20 bis 120 µeq/g, bevorzugt von 30 bis 100 µeq/g auf. Die Carboxyendgruppenkonzentration des Polyamids (a) beträgt bevorzugt maximal 30 µeq/g, besonders bevorzugt maximal 20 µeq/g.

Das erfindungsgemäß enthaltene Polyamid (a) weist vorzugsweise eine Lösungsviskosität (gemessen in m-Kresol-Lösung, 0,5 Gew.-% bei 20°C nach DIN EN ISO_Norm 307) im Bereich von 1,75 bis 2,4, insbesondere von 1,8 bis 2,3 auf.

Das Elastomer b), welches auch als Mikrogel bezeichnet wird, wird durch Emulsionspolymerisation hergestellt. Die Bezeichnung "Elastomer" bedeutet erfindungsgemäß insbesondere, dass es sich um ein vernetztes, auch teilvernetztes, d.h. verzweigtes polymeres Material handelt, welches bevorzugt eine Glasübergangstemperatur von unter 10 °C, bevorzugt von unter 0°C aufweist.

Das Elastomer b) wird durch Emulsionspolymerisation von
b1) ≥ 55 Gew.-% mindestens einem konjugierten Dien,
b2) 5 bis 45 Gew.-% Acrylnitril,
b3) gegebenenfalls 0 bis 5 Gew.-% eines oder mehrerer polyfunktioneller radikalisch polymerisierbarer Monomere,
b4) gegebenenfalls 0 bis 20 Gew.-% eines oder mehrerer von b1) bis b3) verschiedener radikalisch polymerisierbarer Monomere,
hergestellt, wobei sich die Gew.-%-Angaben auf die Gesamtmenge der Komponenten b1) bis b4) beziehen.

Als konjugierte Diene (b1) werden hier vorzugsweise Monomere eingesetzt aus der Gruppe bestehend aus Butadien, Isopren, 2-Chlorbutadien und 2,3-Dichlorbutadien. Besonders bevorzugt ist Butadien.

In einer bevorzugten Ausführungsform liegt die Menge des Acrylnitrils als Komponente b2) im Bereich von 10 bis 40 Gew.-%, besonders bevorzugt im Bereich von 28 bis 40 Gew.-% bezogen auf die Gesamtmenge der Komponenten b1) bis b4).

Das polyfunktionelle radikalisch polymerisierbare Monomer (b3) wird bevorzugt aus zwei- oder mehrfach ungesättigten, radikalisch polymerisierbaren Monomeren, insbesondere Verbindungen mit vorzugsweise 2, 3 oder 4 polymerisierbaren C=C-Doppelbindungen, wie insbesondere Diisopropenylbenzol, Divinylbenzol, Divinylether, Divinylsulfon, Diallylphthalat, Triallylcyanurat, Triallylisocyanurat, 1,2-Polybutadien, N,N'-m-Phenylenmaleimid, 2,4-Toluylenbis(maleimid), Triallyltrimellitat sowie polyfunktionellen Acrylaten und Methacrylaten von mehrwertigen C₂- bis C₁₀-Alkohlen, insbesondere von Ethylenglykol, Propandiol-1,2, Butandiol-1,4, Hexandiol, Polyethylenglykol mit 2 bis 20, insbesondere 2 bis 8 Oxyethyleneinheiten, Neopentylglykol, Bisphenol-A, Glycerin, Trimethylolpropan, Pentaerythrit, Sorbit mit ungesättigten Polyestern aus aliphatischen Di- und Polyolen sowie Mischungen hiervon ausgewählt.

Bevorzugter werden die polyfunktionellen radikalisch polymerisierbaren Monomere (b3) ausgewählt aus: Divinylbenzol, Trimethylolpropantrimethacrylat, Trimethylolpropantriacrylat, Ethylenglykoldimethacrylat, Ethylenglykoldiacrylat, Butandiol-1,4-di(meth)acrylat und Mischungen hiervon.

Die genannten polyfunktionellen radikalisch polymerisierbaren Monomere b3) dienen bei der Herstellung des Elastomers (b) insbesondere der Vernetzung.

Eine Vernetzung des Elastomers (b) kann aber auch ohne Verwendung der Komponente b3) durch Emulsionspolymerisation der Komponenten b1) und b2) und nachfolgender Vernetzung in Gegenwart eines Radikalstarters erfolgen. Geeignete Radikalstarter werden dabei beispielsweise ausgewählt aus organischen Peroxiden, insbesondere Dicumylperoxid, t-Butylcumylperoxid, Bis-(t-butylperoxy-isopropyl)benzol, Di-t-butylperoxid, 2,5-Dimethylhexan-2,5-dihydroperoxid, 2,5-Dimethylhexan-3,2,5-dihydroperoxid, Dibenzoylperoxid, Bis-(2,4-dichlorobenzoyl)peroxid, t-Butylperbenzoat sowie organische Azoverbindungen, insbesondere Azo-bis-isobutyronitril und Azo-biscyclohexannitril sowie Di- und Polymercaptoverbindungen, insbesondere Dimercaptoethan, 1,6-Dimercaptohexan, 1,3,5-Trimercaptotriazin und mercaptoterminierte Polysulfidkautschuke, insbesondere mercaptoterminierte Umsetzungsprodukte von Bis-Chlorethylformal mit Natriumpolysulfid etc.

Für die Vernetzung im Anschluss an die Polymerisation sei insbesondere auf EP 1307 504 verwiesen.

Des weiteren kann die Vernetzung bei der Herstellung des Elastomers b) auch ohne Zusatz der genannten polyfunktionellen radikalisch polymerisierbaren Monomere b3) durch Fortführung der Polymerisation bis zu hohen Umsätzen, insbesondere von Umsätzen ≥ 70 mol-%, bevorzugt ≥ 80 mol-%, bezogen auf die Gesamtmenge der eingesetzten Monomermischung, bevorzugt bei Temperaturen von ≥ 10 °C, bevorzugter ≥ 20 °C, oder im Monomerzulaufverfahren durch Polymerisation mit hohen internen Umsätzen erfolgen.

Eine weitere Möglichkeit besteht auch in der Durchführung der Polymerisation in Abwesenheit von Reglern und/oder bei erhöhter Temperatur, insbesondere bei Temperaturen 10°C. Unter diesen Bedingungen sind die Doppelbindungen, die bei Mitverwendung von Dienen als Monomer im Polymerisat (b) verbleiben, ebenfalls für Vernetzungsreaktionen zugänglich.

Wahlweise kann das erfindungsgemäß verwendete Elastomer (b) weiterhin 0 bis 20 Gew.-% eines von den Komponenten b1) bis b3) verschiedenen radikalisch polymerisierbaren Monomer b4) enthalten. Bevorzugt wird das radikalisch polymerisierbare Monomer b4) ausgewählt aus: Styrol, Estern der Acryl- und Methacrylsäure, wie Ethyl(meth)acrylat, Methyl(meth)acrylat, n-Propyl(meth)acrylat, n-Butyl(meth)acrylat, 2-Ethylhexyl(meth)acrylat, sowie Hydroxylgruppenhaltige (Meth)acrylate, wie Hydroxyethyl(meth)-acrylat, Hydroxypropyl(meth)acrylat und Hydroxybutyl(meth)acrylat, Tetrafluorethylen, Vinylidenfluorid, Hexafluorpropen, sowie doppelbindungshaltigen Carbonsäuren, insbesondere Acrylsäure, Methacrylsäure, Maleinsäure, Fumarsäure, Itakonsäure, aminfunktionalisierten (Meth)acrylaten, wie primäre Amino-alkyl(meth)-acrylsäureestern, wie Aminoethyl(meth)acrylat, Aminopropyl(meth)acrylat und Aminobutyl(meth)acrylat, sekundäre Amino-alkyl(meth)-acrylsäureestern, insbesondere tert.-Butylamino(C₂-C₄)alkyl(meth)acrylat, Acrolein, N-Vinyl-2-pyrrolidon, 2-Vinyl-pyridin, 4-Vinyl-pyridin, N-Allyl-Harnstoff und N-Allyl-Thioharnstoff, (Meth)acrylamide, wie (Meth)acrylamid, einfach oder zweifach N-substituierte (Meth)acrylamide und Mischungen hiervon.

Das Elastomer b) besteht bevorzugt aus Nitrilkautschuk (NBR) und wird durch Emulsionspolymerisation hergestellt, wobei während der Polymerisation eine Vernetzung stattfindet. Am Ende der Emulsionspolymerisation liegt der Nitrilkautschuk in der Form von vernetzten Partikeln vor, welche auch als NBR-Mikrogel bezeichnet werden.

Die erfindungsgemäß bevorzugten NBR-Mikrogele weisen im Allgemeinen Wiederholungseinheiten mindestens eines α,β-ungesättigten Nitrils, mindestens eines konjugierten Diens und gegebenenfalls von einem oder mehreren weiteren copolymerisierbaren Monomeren auf.

Das konjugierte Dien kann von jeder Natur sein. Bevorzugt werden (C₄-C₆)-konjugierte Diene eingesetzt. Besonders bevorzugt sind 1,3-Butadien, Isopren, 2,3-Dimethylbutadien, Piperylen, 1,3-Pentadien oder Mischungen daraus. Insbesondere bevorzugt sind 1,3-Butadien und Isopren oder Gemische daraus. Ganz besonders bevorzugt ist 1,3-Butadien.

Als α,β-ungesättigtes Nitril kann jedes bekannte α,β-ungesättigte Nitril eingesetzt werden, bevorzugt sind (C₃-C₅)-α,β-ungesättigte Nitrile wie Acrylnitril, Methacrylnitril, 1-Chloracrylnitril, Ethacrylnitril oder Mischungen davon. Besonders bevorzugt ist Acrylnitril.

Ein besonders bevorzugter Nitrilkautschuk ist somit ein Copolymer aus Acrylnitril und 1,3-Butadien.

Neben dem konjugierten Dien und dem α,β-ungesättigten Nitril können noch ein oder mehrere weitere copolymerisierbare Monomere eingesetzt werden, z.B. α,β-ungesättigte Mono- oder Dicarbonsäuren, deren Ester oder Amide.

Als α,β-ungesättigte Mono- oder Dicarbonsäuren können beispielsweise Fumarsäure, Maleinsäure, Acrylsäure, Methacrylsäure, Crotonsäure und Itakonsäure verwendet werden. Bevorzugt sind dabei Maleinsäure, Acrylsäure, Methacrylsäure und Itakonsäure. Solche Nitrilkautschuke werden üblicherweise auch als carboxylierte Nitrilkautschuke, oder abgekürzt auch als "XNBR" bezeichnet.

Als Ester der α,β-ungesättigten Carbonsäuren werden beispielsweise Alkylester, Alkoxyalkylester, Hydroxyalkylester oder Mischungen daraus eingesetzt.

Besonders bevorzugte Alkylester der α,β-ungesättigten Carbonsäuren sind Methyl(meth)acrylat, Ethyl(meth)acrylat, Propyl(meth)acrylat, n-Butyl(Meth)acrylat, t-Butyl(meth)acrylat, Hexyl(meth)acrylat, 2-Ethlyhexyl(meth)acrylat, Octyl(meth)acrylat und Lauryl(meth)acrylat. Insbesondere wird n-Butylacrylat eingesetzt.

Besonders bevorzugte Alkoxyalkylester der α,β-ungesättigten Carbonsäuren sind Methoxyethyl(meth)acrylat, Ethoxyethyl(meth)acrylat und Methoxyethyl(meth)acrylat. Insbesondere wird Methoxyethylacrylat eingesetzt.

Besonders bevorzugte Hydroxyalkylester der α,β-ungesättigten Carbonsäuren sind Hydroxyethyl(meth)acrylat, Hydroxypropyl(meth)acrylat und Hydroxy(butyl(meth)acrylat.

Als Ester der α,β-ungesättigten Carbonsäuren werden ferner beispielsweise Polyethylenglykol(meth)acrylat, Polypropylenglykol(meth)acrylat, Glycidyl(meth)acrylat, Epoxy(meth)acrylat und Urethan(meth)acrylat eingesetzt.

Weitere mögliche Monomere sind Vinylaromaten wie Styrol, α-Methylstyrol und Vinylpyridin.

Die Anteile an konjugiertem Dien und α,β-ungesättigtem Nitril in den erfindungsgemäß bevorzugt verwendeten Nitrilkautschuken können in weiten Bereichen variieren. Der Anteil des oder der Summe der konjugierten Diene liegt üblicherweise im Bereich von 20 bis 95 Gew.%, bevorzugt im Bereich von 40 bis 90 Gew.-%, besonders bevorzugt im Bereich von 60 bis 85 Gew. %, bezogen auf das Gesamtpolymer. Der Anteil des oder der Summe der α,β-ungesättigten Nitrile liegt üblicherweise bei 5 bis 80 Gew.%, bevorzugt bei 10 bis 60 Gew.-%, besonders bevorzugt bei 15 bis 40 Gew.-%, bezogen auf das Gesamtpolymer. Die Anteile der Monomere summieren sich dabei jeweils zu 100 Gew.-% auf.

Die zusätzlichen Monomere können in Mengen von 0 bis 40 Gew.%, bevorzugt 0,1 bis 40 Gew.-%, besonders bevorzugt 1 bis 30 Gew.-%, bezogen auf das Gesamtpolymer, vorliegen. In diesem Fall werden entsprechende Anteile des oder der konjugierten Diene und/oder des oder der α**,**β-ungesättigten Nitrile durch die Anteile dieser zusätzlichen Monomere ersetzt, wobei sich die Anteile aller Monomere weiterhin jeweils zu 100 Gew.-% aufsummieren.

Werden als zusätzliche Monomere Ester der (Meth)acrylsäure eingesetzt, so erfolgt dies üblicherweise in Mengen von 1 bis 25 Gew. %.

Werden als zusätzliche Monomere α,β-ungesättigte Mono- oder Dicarbonsäuren eingesetzt, so erfolgt dies üblicherweise in Mengen von weniger als 10 Gew. %.

Der Stickstoffgehalt wird in den erfindungsgemäß bevorzugt verwendeten Nitrilkautschuk-Mikrogelen gemäß DIN 53 625 nach Kjeldahl bestimmt. Aufgrund der Vernetzung sind die Nitrilkautschuk-Mikrogele in Methylethylketon bei 20°C ≥ 85 Gew. % unlöslich.

Die Glastemperaturen der vernetzen Nitrilkautschuke bzw. Nitrilkautschukmikrogele liegen üblicherweise im Bereich -70°C bis +10°C, vorzugsweise im Bereich - 60°C bis 0°C.

Bevorzugt sind erfindungsgemäß verwendete Elastomere b) Nitrilkautschuke, die Wiederholungseinheiten von Acrylnitril, 1,3-Butadien und gegebenenfalls von einem oder mehreren weiteren copolymerisierbaren Monomeren aufweisen. Ebenso bevorzugt sind Nitrilkautschuke, die Wiederholungseinheiten von Acrylnitril, 1,3-Butadien und einer oder mehreren α,β-ungesättigten Mono- oder Dicarbonsäure, deren Estern oder Amiden aufweisen, und insbesondere Wiederholungseinheiten eines Alkylesters einer α,β-ungesättigten Carbonsäuren, ganz besonders bevorzugt von Methyl(meth)acrylat, Ethyl(meth)acrylat, Propyl(meth)acrylat, n-Butyl(meth)acrylat, t-Butyl(meth)acrylat, Hexyl(meth)acrylat, 2-Ethlyhexyl(meth)acrylat, Octyl(meth)acrylat oder Lauryl(meth)acrylat.

Die Herstellung der erfindungsgemäß verwendeten Elastomere bzw. der als Komponente b) bevorzugten Nitrilkautschuk-Mikrogele erfolgt im erfindungsgemä-ßen Verfahren durch Emulsionspolymerisation.

Emulsionspolymerisationen werden im Allgemeinen unter Einsatz von Emulgatoren durchgeführt. Hierfür sind dem Fachmann eine große Bandbreite von Emulgatoren bekannt und zugänglich. Als Emulgatoren können beispielsweise anionische Emulgatoren oder auch neutrale Emulgatoren eingesetzt werden. Bevorzugt werden anionische Emulgatoren eingesetzt, besonders bevorzugt in Form wasserlöslicher Salze.

Als anionische Emulgatoren können modifizierte Harzsäuren eingesetzt werden, die durch Dimerisierung, Disproportionierung, Hydrierung und Modifikation von Harzsäuregemischen erhalten werden, die Abietinsäure, Neoabietinsäure, Palustrinsäure, Lävopimarsäure enthalten. Eine besonders bevorzugte modifizierte Harzsäure ist die disproportionierte Harzsäure (Ullmann's Encyclopedia of Industrial Chemistry, 6. Auflage, Band 31, S. 345-355).

Als anionische Emulgatoren können auch Fettsäuren eingesetzt werden. Diese enthalten 6 bis 22 C-Atome pro Molekül. Sie können voll gesättigt sein oder auch eine oder mehrere Doppelbindungen im Molekül enthalten. Beispiele für Fettsäuren sind Capronsäure, Laurinsäure, Myristinsäure, Palmitinsäure, Stearinsäure, Ölsäure, Linolsäure, Linolensäure. Die Carbonsäuren basieren üblicherweise auf herkunftsspezifischen Ölen oder Fetten wie z. B. Castoroil, Baumwollsaat, Erdnussöl, Leinsamenöl, Kokosnussfett, Palmkernöl, Olivenöl, Rapsöl, Sojabohnenöl, Fischöl und Rindertalg etc. (Ullmann's Encyclopedia of Industrial Chemistry, 6. Auflage, Band 13, S. 75-108). Bevorzugte Carbonsäuren leiten sich von der Kokosfettsäure und von Rindertalg ab und sind teil- bzw. vollhydriert.

Derartige Carbonsäuren auf Basis modifizierter Harzsäuren bzw. Fettsäuren werden als wasserlösliche Lithium- Natrium, Kalium und Ammoniumsalze verwendet.

Die Natrium- und Kaliumsalze sind bevorzugt.

Anionische Emulgatoren sind ferner Sulfonate, Sulfate und Phosphate, die an einen organischen Rest gebunden sind. Als organischer Rest kommen aliphatische, aromatische, alkylierte Aromaten, kondensierte Aromaten, sowie methlyenverbrückte Aromaten infrage, wobei die methlyenverbrückten und kondensierten Aromaten zusätzlich alkyliert sein können. Die Länge der Alkylketten beträgt 6 bis 25 C-Atome. Die Länge der an die Aromaten gebundenen Alkylketten liegt zwischen 3 und 12 C-Atomen.

Die Sulfate, Sulfonate und Phosphate werden als Lithium-, Natrium-, Kalium- und Ammoniumsalze eingesetzt. Die Natrium-, Kalium und Ammoniumsalze sind bevorzugt.

Beispiele für derartige Sulfonate, Sulfate und Phosphate sind Na-Laurylsulfat, Na-Alkylsulfonat, Na-Alkylarylsulfonat, Na-Salze methylenverbrückter Arylsulfonate, Na-Salze alkylierter Naphthalinsulfonate sowie die Na-Salze methlyenverbrückter Napthalinsulfonate, die auch oligomerisiert sein können, wobei der Oligimerisierungsgrad zwischen 2 bis 10 liegt. Üblicherweise liegen die alkylierten Naphthalinsulfonsäuren und die methylenverbrückten (und gegebenenfalls alkylierten) Naphthalinsulfonsäuren als Isomerengemische vor, die auch mehr als 1 Sulfonsäuregruppe (2 bis 3 Sulfonsäuregruppen) im Molekül enthalten können. Besonders bevorzugt sind Na-Laurylsulfat, Na-Alkylsulfonatgemische mit 12 bis 18 C-Atomen, Na-Alkylarylsulfonate, Na-Diisobutylennaphthalinsulfonat, methlyenverbückte Polynaphthalinsulfonatgemische sowie methylenverbrückte Arylsulfonatgemische.

Neutrale Emulgatoren leiten sich von Additionsprodukten des Ethylenoxids und des Propylenoxids an Verbindungen mit hinreichend acidem Wasserstoff ab. Hierzu gehören beispielsweise Phenol, alkyliertes Phenol und alkylierte Amine. Die mittleren Polymerisationsgrade der Epoxide liegen zwischen 2 bis 20. Beispiele für neutrale Emulgatoren sind ethoxylierte Nonylphenole mit 8, 10 und 12 Ethylenoxideinheiten. Die neutralen Emulgatoren werden üblicherweise nicht alleine, sondern in Kombination mit anionischen Emulgatoren eingesetzt.

Bevorzugt sind die Na- und K-Salze von disproportionierter Abietinsäure und von teilhydrierter Talgfettsäure, sowie Mischungen derselben, Natriumlaurylsulfat, Na-Alkylsulfonate, Natrium-Alkylbenzolsulfonat sowie alkylierte und methylenverbrückte Naphthalinsulfonsäuren.

Die Emulgatoren werden in einer Menge von 0,2 bis 15 Gew.-Teile, bevorzugt 0,5 bis 12,5 Gew.-Teile, besonders bevorzugt 1,0 bis 10 Gew.-Teile bezogen auf 100 Gew.-Teile der Monomermischung eingesetzt.

Die Emulsionspolymerisation wird im Allgemeinen unter Verwendung der genannten Emulgatoren durchgeführt. Falls nach Abschluss der Polymerisation Latices erhalten werden, die aufgrund einer gewissen Instabilität zur vorzeitigen Selbstkoagulation neigen, können die genannten Emulgatoren auch noch zur Nachstabilisierung der Latices zugesetzt werden. Dies kann insbesondere vor der Entfernung nicht umgesetzter Monomerer durch Behandlung mit Wasserdampf sowie vor einer Latexlagerung oder vor der Durchführung der Sprühtrocknung notwendig werden.

### Molekulargewichtsregler:

Die Emulsionspolymerisation wird bevorzugt so durchgeführt, dass insbesondere der erfindungsgemäß bevorzugte Nitrilkautschuk während der Polymerisation vernetzt. Daher ist die Verwendung von Molgewichtsreglern im Allgemeinen nicht notwendig. Es können aber trotzdem Molekulargewichtsregler eingesetzt werden, deren Natur jedoch nicht kritisch ist. Der Regler wird dann üblicherweise in einer Menge von 0,01 bis 3,5 Gew.-Teilen, bevorzugt von 0,05 bis 2,5 Gew.-Teilen auf 100 Gew.-Teile der Monomermischung eingesetzt. Als Molekulargewichtsregler können beispielsweise mercaptanhaltige Carbonsäuren, mercaptanhaltige Alkohole, Xanthogendisulfide, Thiuramdisulfide, halogenierte Kohlenwasser-stoffe, verzweigte aromatische oder aliphatische Kohlenwasserstoffe sowie auch lineare oder verzweigte Mercaptane eingesetzt werden. Diese Verbindungen weisen üblicherweise 1 bis 20 Kohlenstoffatome auf (siehe Rubber Chemistry and Technology (1976), 49(3), 610-49 (Uraneck, C. A.) : "Molecular weight control of elastomers prepared by emulsion polymerization" und D. C. Blackley, Emulsion Polymerization, Theory and Practice, Applied Science Publishers Ltd London, 1975, S. 329-381).

Beispiele für mercaptanhaltige Alkohole und mercaptanhaltige Carbonsäuren sind Monothioethylenglycol und Mercaptopropionsäure.

Beispiele für Xanthogendisulfide sind Dimethylxanthogendisulfid, Diethylxanthogendisulfid, und Diisopropylxanthogendisulfid.

Beispiele für Thiuramdisulfide sind Tetramethylthiuramdisulfid, Tetraethylthiuramdisulfid und Tetrabutylthiuramdisulfid.

Beispiele für halogenierte Kohlenwasserstoffe sind Tetrachlorkohlenstoff, Chloroform, Methyljodid, Dijodmethan, Difluorodijodomethan, 1,4-Dijodobutan, 1,6-Dijodohexan, Ethylbromid, Ethyljodid, 1,2-Dibromotetrafluorethan, Bromtrifluorethen, Bromdifluorethen.

Beispiele für verzweigte Kohlenwasserstoffe sind diejenigen, von denen leicht ein H-Radikal abgespaltet werden kann. Beispiele hierfür sind Toluol, Ethylbenzol, Cumol, Pentaphenylethan, Triphenylmethan, 2,4-Diphenyl, 4-Methyl-1-Penten, Dipenten sowie Terpene wie z.B. Limonen, α-Pinen, β-Pinen, α-Carotin und β-Carotin.

Beispiele für lineare oder verzweigte Mercaptane sind n-Hexylmercaptan oder auch Mercaptane, die 12-16 Kohlenstoffatome und mindestens drei tertiäre Kohlenstoffatomen enthalten, wobei der Schwefel an eines dieser tertiären Kohlenstoffatome gebunden ist. Diese Mercaptane können entweder einzeln oder in Gemischen verwendet werden. Geeignet sind beispielsweise die Additionsverbindungen von Schwefelwasserstoff an oligomerisiertes Propen, insbesondere tetrameres Propen, oder an oligomerisiertes Isobuten, insbesondere trimere Isobuten, die in der Literatur häufig als tertiäres Dodecylmercaptan ("t-DDM") bezeichnet werden.

Solche Alkylthiole bzw. (Isomeren)-Mischungen von Alkylthiolen sind entweder käuflich erhältlich oder a-ber nach Verfahren, die in der Literatur hinlänglich beschrieben sind, für den Fachmann herstellbar (siehe z.B. z.B. JP 07-316126, JP 07-316127 und JP 07-316128 sowie GB 823,823 und GB 823,824.)

Die einzelnen Alkylthiole bzw. deren Gemische werden üblicherweise in einer Menge von 0,05 bis 3 Gew.-Teilen, vorzugsweise von 0,1 bis 1,5 Gew.-Teilen bezogen auf 100 Gew.-Teile der Monomermischung eingesetzt.

Die Dosierung des Molekulargewichtsreglers bzw. der Molekulargewichtsreglermischung erfolgt entweder zu Beginn der Polymerisation oder aber portionsweise im Verlauf der Polymerisation, wobei die portionsweise Zugabe sämtlicher oder einzelner Komponenten der Reglermischung während der Polymerisation bevorzugt ist.

Zur Initiierung der Emulsionspolymerisation werden typischerweise Polymerisationsinitiatoren eingesetzt, die in Radikale zerfallen (radikalische Polymerisationsinitiatoren). Hierzu gehören Verbindungen, die eine -O-O- Einheit (Peroxo-Verbindungen) oder eine - N=N- Einheit (Azoverbindung) enthalten.

Zu den Peroxoverbindungen gehören Wasserstoffperoxid, Peroxodisulfate, Peroxodiphosphate, Hydroperoxide, Persäuren, Persäureester, Persäureanhydride und Peroxide mit zwei organischen Resten. Geeignete Salze der Peroxodischwefelsäure und der Peroxodiphosphorsäure sind die Natrium-, Kalium- und Ammoniumsalze. Geeignete Hydroperoxide sind z.B. t-Butylhydroperoxid, Cumolhydroperoxid und p-Menthanhydroperoxid. Geeignete Peroxide mit zwei organischen Resten sind Dibenzoylperoxid, 2,4,-Dichlorbenzoylperoxid, Di-t-Butylperoxid, Dicumylperoxid, t-Butylperbenzoat, t-Butylperacetat etc. Geeignete Azoverbindungen sind Azobisisobutyronitril, Azobisvaleronitril und Azobiscyclohexannitril.

Wasserstoffperoxid, Hydroperoxide, Persäuren, Persäureester, Peroxodisulfat und Peroxodiphosphat werden auch in Kombination mit Reduktionsmitteln eingesetzt. Geeignete Reduktionsmittel sind Sulfenate, Sulfinate, Sulfoxylate, Dithionit, Sulfit, Metabisulfit, Disulfit, Zucker, Harnstoff, Thioharnstoff, Xanthogenate, Thioxanthogenate, Hydraziniumsalzen, Amine und Aminderivate wie Anilin, Dimethylanilin, Monoethanolamin, Diethanolamin oder Triethanolamin. Initiatorsysteme, die aus einem Oxidations- und einem Reduktionsmittel bestehen, bezeichnet man als Redoxsysteme. Bei der Verwendung von Redoxsystemen verwendet man häufig zusätzlich Salze von Übergangsmetallverbindungen wie Eisen, Cobalt oder Nickel in Kombination mit geeigneten Komplexbildnern wie Natrium-Ethylendiamtetraacetat, Natrium-Nitrilotriacetat sowie Trinatriumphosphat oder Tetrakaliumdiphsophat.

Bevorzugte Redoxsysteme sind beispielsweise: 1) Kaliumperoxodisulfat in Kombination mit Triethanolamin, 2) Ammoniumperoxodiphosphat in Kombination mit Natrimmetabisulfit (Na₂S₂O₅), 3) p-Menthanhydroperoxid / Natriumformaldehydsulfoxylat in Kombination mit Fe-II-Sulfat (FeSO₄ x 7 H₂O), Natrium-Ethylendiaminoacetat und Trinatriumphosphat; 4) Cumol-hydroperoxid / Natriumformaldehydsulfoxylat in Kombination mit Fe-II-Sulfat (FeSO₄ x 7 H₂O), Natrium-Ethylendiaminoacetat und Tetrakaliumdiphosphat.

Die Menge an Oxidationsmittel beträgt bevorzugt 0,001 bis 1 Gew.-Teile bezogen auf 100 Gew.-Teile Monomer. Die molare Menge an Reduktionsmittel liegt zwischen 50% bis 500% bezogen auf die molare Menge des eingesetzten Oxidationsmittels.

Die molare Menge an Komplexbildner bezieht sich auf die Menge an eingesetztem Übergangsmetall und ist mit diesem üblicherweise äquimolar.

Zur Durchführung der Polymerisation werden sämtliche oder einzelne Komponenten des Initiatorsystems zu Beginn der Polymerisation der Polymerisation oder während der Polymerisation zudosiert.

Die portionsweise Zugabe sämtlicher sowie einzelner Komponenten des Aktivatorsystems während der Polymerisation ist bevorzugt. Durch die sequentielle Zugabe lässt sich die Reaktionsgeschwindigkeit steuern.

Die Polymerisationszeit liegt im Allgemeinen im Bereich von 5 h bis 30 h und hängt im Wesentlichen vom Acrylnitrilgehalt der Monomermischung, vom Aktivatorsystem und von der Polymerisationstemperatur ab.

Die Polymerisationstemperatur liegt im Allgemeinen im im Bereich von 0 bis 100°C, bevorzugt im Bereich von 20 bis 80°C.

Bei Erreichung von Umsätzen im Bereich von 50 bis 100%, vorzugsweise im Bereich von oberhalb 85% wird die Polymerisation im Allgemeinen abgestoppt.

Bei der Polymerisation werden möglichst hohe Polymerisationsumsätze angestrebt, um den Nitrilkautschuk zu vernetzen. Aus diesem Grund kann auf die Verwendung von Stoppern verzichtet werden. Werden trotzdem Stopper verwendet, so eignen sich beispielsweise Dimethyldithiocarbamat, Na-Nitrit, Mischungen von Dimethyldithiocarbamat und Na-Nitrit, Hydrazin und Hydroxylamin sowie hiervon abgeleitete Salze wie Hydraziniumsulfat und Hydroxylammoniumsulfat, Diethylhydroxylamin, Diisopropylhydroxylamin, wasserlösliche Salze des Hydrochinon, Natriumdithionit, Phenyl-α-Naphthylamin und aromatische Phenole wie tert-Butylbrenzkatechol, oder Phenothiazin.

Die bei der Emulsionspolymerisation verwendete Wassermenge liegt im Bereich von 70 bis 300 Gew.-Teilen, bevorzugt im Bereich von 80 bis 250 Gew.-Teilen, besonders bevorzugt im Bereich von 90 bis 200 Gew.-Teilen Wasser bezogen auf 100 Gew.-Teile der Monomermischung.

Zur Reduktion der Viskosität während der Polymerisation, zur pH-Einstellung sowie als pH-Puffer können der wässrigen Phase bei der Emulsionspolymerisation Salze zugesetzt werden. Typische Salze sind Salze einwertiger Metalle in Form von Kalium- und Natriumhydroxid, Natriumsulfat, Natriumcarbonat, Natriumhydrogencarbonat, Natriumchlorid und Kaliumchlorid. Bevorzugt sind Natrium- und Kaliumhydroxid, Natriumhydrogencarbonat und Kaliumchlorid. Die Mengen dieser Elektrolyte liegen im Bereich 0 bis 1 Gew.-Teile, vorzugsweise 0 bis 0,5 Gew.-Teile bezogen auf 100 Gew.-Teile der Monomermischung.

Die Polymerisation kann entweder diskontinuierlich oder auch kontinuierlich in einer Rührkesselkaskade durchgeführt werden.

Zur Erzielung eines gleichmäßigen Polymerisationsverlaufs wird für den Start der Polymerisation nur ein Teil des Initiatorsystems verwendet und der Rest während der Polymerisation nachdosiert. Üblicherweise startet man die Polymerisation mit 10 bis 80 Gew. %, vorzugsweise 30-50 Gew. % der Gesamtmenge an Initiator. Auch die Nachdosierung einzelner Bestandteile des Initiatorsystems ist möglich.

Will man chemisch einheitliche Produkte herstellen, werden Acrylnitril bzw. Butadien nachdosiert, wenn die Zusammensetzung außerhalb des azeotropen Butadien/Acrylnitril-Verhältnisses liegt. Vorzugsweise ist eine Nachdosierung bei NBR-Typen mit Acrylnitrilgehalten von 10 bis 34 sowie bei den Typen mit 40 bis 50 Gew.% Acrylnitril (W. Hofmann, Rubber Chem. Technol. 36 (1963) 1) der Fall. Die Nachdosierung erfolgt - wie z.B. in der DD 154 702 angegeben - vorzugsweise computergesteuert auf der Basis eines Rechnerprogramms.

Zur Entfernung nicht umgesetzter Monomere sowie flüchtiger Bestandteile wird der abgestoppte Latex einer Wasserdampfdestillation unterzogen. Hierbei werden Temperaturen im Bereich von 70°C bis 150°C angewandt, wobei bei Temperaturen <100°C der Druck reduziert wird.

Vor der Entfernung der flüchtigen Bestandteile kann eine Nachstabilisierung des Latex mit Emulgator erfolgen. Hierfür verwendet man zweckmäßigerweise die zuvor genannten Emulgatoren in Mengen von 0,1 bis 2,5 Gew. %, vorzugsweise 0,5 bis 2,0 ,Gew. % bezogen auf 100 Gew.-Teile Nitrilkautschuk.

Vor oder während der Sprühtrocknung können dem Latex ein oder mehrere Alterungsschutzmittel zugesetzt werden. Hiefür eigenen sich phenolische, aminische und auch sonstige Alterungsschutzmittel.

Geeignete phenolische Alterungsschutzmittel sind alkylierte Phenole, styrolisiertes Phenol, sterisch gehinderte Phenole wie 2,6-Di-tert.-Butylphenol, 2,6-Di-tert-Butyl-p-Kresol (BHT), 2,6-Di-tert.-Butyl-4-Ethylphenol, estergruppenhaltige sterisch gehinderte Phenole, thioetherhaltige sterisch gehinderte Phenole, 2,2'-Methylen-bis-(4-Methyl-6-*tert*-Butylphenol) (BPH) sowie sterisch gehinderte Thiobisphenole.

Falls eine Verfärbung des Kautschuks ohne Bedeutung ist, werden auch aminische Alterungsschutzmittel z. B. Mischungen aus Diaryl-p-phenylendiaminen (DTPD), octyliertes Diphenylamin (ODPA), Phenyl-α-Naphthylamin (PAN), Phenyl-β-Naphthylamin (PBN), vorzugsweise solche auf Phenylendiaminbasis eingesetzt. Beispiele für Phenylendiamine sind *N*-Isopropyl-*N'-*phenyl-*p*-Phenylendiamin, *N*-1,3-Dimethylbutyl-*N'-*Phenyl-p-Phenylendiamin (6PPD), *N*-1,4-Dimethylpentyl-*N*'-phenyl-*p*-Phenylendiamin (7PPD), *N*,*N'*-bis-1,4-(1,4-Dimethylpentyl)-*p*-Phenylendiamin (77PD) etc.

Zu den sonstigen Alterungsschutzmitteln gehören Phosphite wie Tris-(nonylphenyl)phosphit, polymerisiertes 2,2,4-Trimethyl-1,2-dihydrochinolin (TMQ), 2-Mercaptobenzimidazol (MBI), Methyl-2-Mercaptobenzimidazol (MMBI), Zinkmethylmercaptobenzimidazol (ZMMBI). Die Phosphite werden im allgemeinen in Kombination mit phenolischen Altrungsschutzmitteln eingesetzt. TMQ, MBI und MMBI werden vor allem für NBR-Typen verwendet, die peroxidisch vulkanisiert werden.

Bei den erfindungsgemäß verwendeten Elastomeren b) handelt es sich im Allgemeinen um nicht durch energiereiche Strahlung vernetzte Elastomere bzw. vernetzte Mikrogele, da deren Verwendung zu Kompatibilitätsproblemen mit der Polyamid-Matrix führen kann, mithin zu verschlechterten mechanischen Eigenschaften.

Die Erfinder fanden überraschend, dass die Polyamid-Elastomer-Mischungen die gewünschten Eigenschaften aufweisen, wenn die Aufarbeitung des Elastomers bzw. der Mikrogele b) durch Sprühtrocknung aus dem bei der Emulsionspolymerisation erhaltenen Latex erfolgt. Die Sprühtrocknung der Latices erfolgt im Allgemeinen in üblichen Sprühtürmen. Dabei wird der bevorzugt auf 30 bis 100°C erwärmte Latex über Pumpen in den Sprühturm befördert und über im Kopf des Turms befindliche Düsen bevorzugt bei Drücken von 50 bis 500 bar, vorzugsweise 100 bis 300 bar versprüht. Heissluft mit einer Eintrittstemperatur von bevorzugt 100 bis 200° C wird im Gegenstrom zugeführt und verdampft das Wasser. Das Pulver sinkt nach unten und das trockene Pulver wird am Fuß des Turmes ausgeschleust. Gegebenenfalls verwendete Trennmittel und andere Additive, wie zum Beispiel Alterungsschutzmittel, wie Antioxidantien, optische Aufheller etc. werden bevorzugt als trockene Pulver ebenfalls am Kopf des Turmes eingeblasen. Die dem Sprühturm zugeführten Latices weisen bevorzugt Feststoffkonzentrationen von 10 bis 60, bevorzugter 20 bis 50 Gew.-%, noch bevorzugter 30 bis 50 Gew.-% bezogen auf den Latex (bestimmt nach ISO 126:2005) auf.

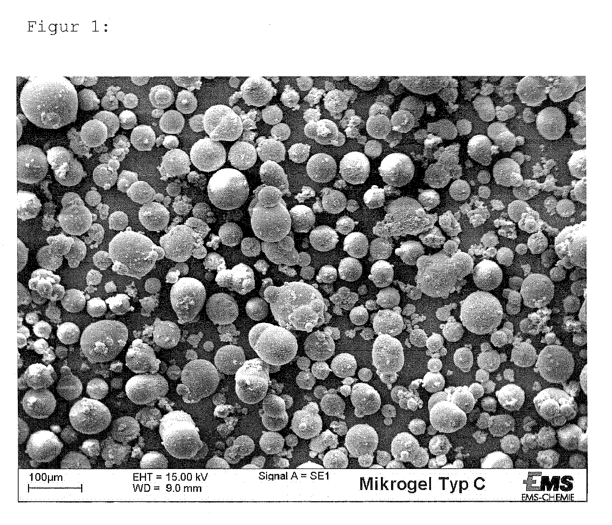

Durch diese Art der Aufarbeitung werden insbesondere sphärische oder nahezu sphärische Mikrogelpartikelagglomerate erhalten, deren mittlerer Durchmesser bevorzugt 300 µm, bevorzugter 200 µm, noch bevorzugter 100 µm nicht übersteigt (s. z.B. Figur 1).

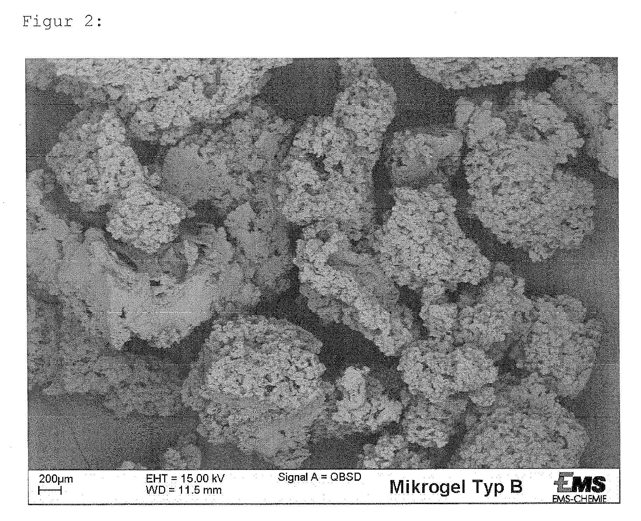

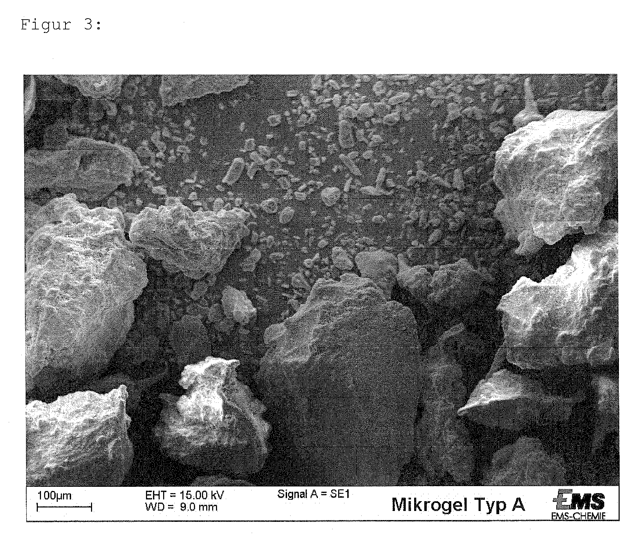

Das erfindungsgemässe verwendete Elastomer (b), das in dieser Form mit dem Polyamid (a) und gegebenenfalls zusätzlich mit dem Polyamid (c) und gegebenenfalls weiteren Additiven gemischt wird, besteht also bevorzugt aus nahezu sphärischen Partikeln, die bevorzugt einem mittleren Durchmesser im Bereich von 2 bis 300 µm, bevorzugter im Bereich von 2 bis 200 µm, noch bevorzugter im Bereich von 5 bis 150 µm und insbesondere im Bereich von 5 bis 100 µm besitzen. Andere Methoden der Aufarbeitung der Mikrogel-Latices, wie insbesondere durch Koagulation, durch Cokoagulation mit einem weiteren Latexpolymer sowie durch Gefrierkoagulation der Latices, Filtration, anschließender Krümelwäsche, Trocknung und anschließende Mahlung ergeben vergleichweise grobe, unregelmässig geformte Mikrogelpartikel mit im Allgemeinen weitaus größerem mittleren Durchmesser (s. Figur 2 und 3).

Bei der Aufarbeitung des bei der Emulsionspolymerisation erhaltenen Latex durch Sprühtrocknung können bevorzugt zusätzlich auch handelsübliche Trennmittel zugesetzt werden.

Vorzugsweise werden die Trennmittel ausgewählt aus Kieselsäuren, insbesondere mit einer spezifischen Oberfläche nach BET von mehr als 5 m²/g, Calciumcarbonat, Magnesiumcarbonat, Silikate, wie Talk und Glimmer, Fettsäuresalze, wie insbesondere Alkali- und Erdalkalimetallsalze, wie Salze von Fettsäuren mit mehr als 10 Kohlenstoffatomen, wie insbesondere Calcium- und Magnesiumsalze derartiger Fettsäuren, wie Calciumstearat, Magnesiumstearat und Aluminiumzinkstearat, Calciumphosphat, Aluminiumoxid, Bariumsulfat, Zinkoxid, Titandioxid, Polymere mit hoher Glastemperatur mit beispielsweise von mehr als 60°C, wie Polyester, Polyolefine und Stärke, hydrophile Polymere, wie Polyvinylalkohol, Polyalkylenoxid-Verbindungen, insbesondere Polyethylenoxidverbindungen, wie Polyethylenglykole oder Polyethylenglykolether, Polyacrylsäure, Polyvinylpyrrolidon und Zellulosederivate, Fluorkohlenwasserstoff-Polymere und Mischungen der genannten Trennmittel.

Bevorzugt wird Calciumcarbonat als Trennmittel bei der Aufarbeitung des Elastomerlatex zugesetzt.

Das Elastomer (b) kann aber auch ohne Zusatz eines separaten Trennmittels in die gewünschte, vorteilhafte Einsatzform (sprühgetrocknetes Mikrogel) überführt und so in die Polyamid-Matrix eingearbeitet werden.

Erfindungsgemäß sind bevorzugt 5 bis 40 Gew.-%, besonders bevorzugt 10 bis 30 Gew.-% des Elastomers (b) in der Polyamid-Elastomer-Mischung, bezogen auf die Summe der Komponenten a) bis c), enthalten.

Als Polyamid (c) können insbesondere sowohl teilkristalline (wie oben definiert) Polyamide als auch amorphe oder mikrokristalline Polyamide enthalten sein.

In einer bevorzugten Ausführungsform enthält die Polyamidformmasse neben der Komponente (a) auch bis zu 20 Gew.-%, insbesondere bis zu 15 Gew.-%, bezogen auf die Summe der Komponenten a) bis c), wenigstens eines amorphen oder mikrokristallinen Polyamids (Komponente c)) auf Basis von aliphatischen, cycloaliphatischen oder aromatischen Diaminen, Dicarbonsäuren und/oder Aminocarbonsäuren, bevorzugt mit 6 bis 36 Kohlenstoffatomen, und Mischungen solcher Homopolyamide und/oder Copolyamide. In dieser Ausführungsform enthalten die Formmassen bevorzugt 2 bis 20 Gew.-%, insbesondere 3 bis 15 Gew.-% Komponente (c) bezogen auf die Summe der Komponenten a) bis c).

Für die erfindungsgemäß eingesetzten bevorzugt amorphen oder mikrokristallinen Polyamide (Komponente c) und/oder Copolyamide werden folgende Systeme bevorzugt:
Polyamid auf Basis von aliphatischen, cycloaliphatischen oder aromatischen Diaminen, Dicarbonsäuren, Lactamen und/oder Aminocarbonsäuren, bevorzugt mit 6 bis 36 Kohlenstoffatomen, oder eine Mischung solcher Homopolyamide und/oder Copolyamide. Bevorzugt handelt es sich bei den cycloaliphatischen Diaminen dabei um MACM, IPD und/oder PACM, mit oder ohne zusätzliche Substituenten. Bei der aliphatischen Dicarbonsäure handelt es sich vorzugsweise um eine aliphatische Dicarbonsäure mit 2 bis 36, bevorzugt 8 bis 20, linear oder verzweigt angeordneten Kohlenstoffatomen, insbesondere bevorzugt mit 10, 12, 13, 14, 16 oder 18 Kohlenstoffatomen.

Dabei steht MACM für die ISO-Bezeichnung Bis-(4-amino-3-methyl-cyclohexyl)-methan, welches unter dem Handelsnamen 3,3'-Dimethyl-4-4'-diaminodicyclohexylmethan als Laromin C260-Typ (CAS Nr. 6864-37-5), bevorzugt mit Schmelzpunkt zwischen -10 °C und 0 °C, kommerziell erhältlich ist. Eine Ziffer, wie z.B. in MACM12 steht dabei für eine aliphatische lineare C12 Dicarbonsäure (DDS, Dodecandisäure), mit welcher das Diamin MACM polykondensiert ist.

TPS steht für Isophthalsäure und PACM steht für die ISO-Bezeichnung Bis-(4-amino-cyclohexyl)-methan, welches unter dem Handelsnamen 4,4'-Diaminodicyclohexylmethan als Dicykan-Typ (CAS Nr. 1761-71-3), bevorzugt mit Schmelzpunkt zwischen 30 °C und 45 °C, kommerziell erhältlich ist.

Ein Homopolyamid ausgewählt aus der Gruppe MACM12, MACM13, MACM14, MACM16, MACM18, PACM12, PACM13, PACM14, PACM16, PACM18 und/oder ein Copolyamid ausgewählt aus der Gruppe MACM12/PACM12, MACM13/PACM13, MACM14/PACM14, MACM16/PACM16, MACM18/PACM18. Ebenfalls möglich sind Mischungen solcher Polyamide.

Polyamide auf Basis von aromatischen Dicarbonsäuren mit 8 bis 18, bevorzugt 8 bis 14 Kohlenstoffatomen oder eine Mischung solcher Homopolyamide und/oder Copolyamide, bevorzugt auf Basis von PXDA und/oder MXDA, insbesondere bevorzugt auf Basis von Lactamen und/oder Aminocarbonsäuren, wobei es sich bei den aromatischen Dicarbonsäuren bevorzugt um TPS, Naphthalindicarbonsäure und/oder IPS handelt.

Polyamide ausgewählt aus der Gruppe: MACM9-18, PACM9-18, MACMI/12, MACMI/MACMT, MACMI/MACMT/12, 6I6T/MACMI/MACMT/12, 3-6T, 6I6T, TMDT, 6I/MACMI/MACMT, 6I/PACMI/PACMT, 6I/6T/MACMI, MAC-MI/MACM36, 6I, 12/PACMI oder 12/MACMT, 6/PACMT, 6/6I, 6/IPDT oder Mischungen daraus, wobei 50 mol-% der IPS durch TPS ersetzt sein kann.

Die genannten bevorzugt amorphen oder mikrokristallinen Polyamide (Komponente c) haben bevorzugt eine Glasübergangstemperatur von größer 40°C, bevorzugter von größer als 60 °C noch bevorzugter von größer als 90 °C, ganz besonders bevorzugt von größer als 110 °C insbesondere von größer als 130°C und am meisten bevorzugt von größer 150°C. Die relative Lösungsviskosität liegt bevorzugt im Bereich von 1,3 bis weniger als 1,75 (gemessen in m-Kresol, 0,5 Gew.-%), bevorzugter im Bereich zwischen 1,4 und 1,70 und insbesondere im Bereich zwischen 1,5 und 1,70.

Die Polyamide c) besitzen bevorzugt eine Schmelzwärme im Bereich von 4 bis 40 J/g, insbesondere im Bereich von 4 bis 25 J/g (mittels DSC bestimmt), die amorphen Polyamide haben Schmelzwärmen kleiner als 4 J/g. Bevorzugt werden mikrokristalline Polyamide auf Basis der Diamine MACM und PACM eingesetzt. Beispiele für solche Polyamide sind die Systeme PA MACM9-18/PACM9-18, wobei insbesondere PA MACM12/PACM12 mit einem PACM-Anteil von größer 55 mol-% (bezogen auf die gesamte Diaminmenge) erfindungsgemäß eingesetzt wird.

Die erfindungsgemäße Polyamid-Elastomer-Zusammensetzung kann bezogen auf 100 Gew.-Teile der Komponenten a) bis c) von 0 bis 100 Gew.-Teile eines oder mehrere übliche Additive enthalten. Das bedeutet, dass, wenn beispielsweise 0 Gewichtsteile der üblichen Additive auf 100 Gewichtsteile der Komponenten a) bis c) vorhanden sind, die Zusammensetzung im Allgemeinen zu 100 Gew.-% aus den Komponenten a) bis c) besteht, oder dass, wenn beispielsweise 100 Gewichtsteile der üblichen Additive auf 100 Gewichtsteile der Komponenten a) bis c) vorhanden sind, die Zusammensetzung im Allgemeinen zu 50 Gew.-% aus den Komponenten a) bis c) besteht.

Bevorzugt besteht die erfindungsgemäße Polyamid-Elastomer-Zusammensetzung aus den Komponenten a) bis c) und den gegebenenenfalls vorhandenenen übliche Additiven. Dies bedeutet, dass die erfindungsgemäße Polyamid-Elastomer-Zusammensetzung insbesondere von 0 bis 50 Gew.-% der Additive und von 50 bis 100 Gew.-% der Komponenten a) bis c), bezogen auf die Gesamtmenge der Polyamid-Elastomer-Zusammensetzung, aufweisen kann.

Die gegebenenfalls vorhandenen Additive sind im Allgemeinen handelsübliche Additive. Sie werden insbesondere aus den bereits erwähnten Trennmitteln, Alterungsschutzmittel, wie Antioxidantien, und optischen Aufhellern, Flammschutzmittel, Lichtstabilisatoren, Nukleirungsmittel, Pilzschutzmittel, Mikrobenschutzmittel, Hydrolyseschutzmittel etc. ausgewählt, welche bevorzugt bei der Herstellung der Komponente b) zugesetzt werden. Darüber hinaus kann es sich um übliche Additive handeln, wie anorganische oder organische Füllstoffe, wie z.B. Glasfasern, anorganische oder organische Pigmente, wie z.B. Ruß, oder Farbstoffe, antistatische Mittel, Antiblockmittel, etc. handeln.

Die genannten Additive können der erfindungsgemäßen Polyamid-Elastomer-Zusammensetzung prinzipiell in jeder Stufe ihrer Herstellung, einschließlich der Herstellung der einzelnen Komponenten a) bis c) zugesetzt werden. So werden, wie bereits erwähnt, die erwähnten Trennmittel zweckmäßig bei der Herstellung der Komponente b) bei der Sprühtrocknung zugesetzt, wobei zusätzlich insbesondere auch Alterungsschutzmittel, wie Antioxidationsmittel, zugesetzt werden können.

Erfindungsgemäß wird ebenso ein Formteil bereitgestellt, das aus einer Polyamid-Elastomer-Mischung, wie sie zuvor beschrieben wurde, erhältlich ist.

Derartige Formteile besitzen vorzugsweise eine Reißdehnung von mindestens 20 %, insbesondere von mindestens 30%, relativ bezogen auf den Ausgangswert und gemessen an Zugstäben in einem Wasser/Glykol-(60:40)-Gemisch bei 135 °C mit einer Lagerungsdauer von 500 h.

Im trockenen Zustand weisen die Formteile vorzugsweise eine Reißdehnung von mindestens 150 % auf.

Ebenso zeigen die Formteile eine hohe Flexibilität, was sich in einem bevorzugten Zug-E-Modul an ISO-Prüfstäben im trockenen Zustand im Bereich von 300 bis 1500 MPa zeigt.

Vorzugsweise weist das Formteil eine Kerbschlagzähigkeit von -30 °C, gemessen an ISO-Prüfstäben, von mindestens 10 kJ/m² auf.

Das Formteil weist vorzugsweise eine Ölquellung in IRM 903 nach 4d bei einer Temperatur von 125 °C von maximal 3 % auf.

Der MVR (Melt Volume Rate) bei 275 °C und einer Belastung von 21,6 kg liegt vorzugsweise im Bereich von 50 bis 200 cm³/10 min.

Die zuvor angegebenen Parameter werden nach den in den Beispielen genannten Methoden bzw. Normen bestimmt.

Verwendung findet die erfindungsgemäße Polyamid-Elastomer-Mischung insbesondere zur Herstellung von Formteilen oder glatten, gewellten oder teilgewellten Mono- oder Mehrschichtrohren, die mit wasser-, öl-, glykol-, methanol-, ethanol- oder kraftstoff-haltigen flüssigen Medien in Kontakt stehen. Hierzu zählen insbesondere Entlüftungen für Kurbelwellengehäuse, Mono- und Mehrschichtleitungen im Unter- wie Überdruckbereich sowie mit Wasser und/oder Glykol in Kontakt stehende Kühlflüssigkeitsleitungen oder ölführende oder mit Öl in Kontakt stehende Leitungen im Automobilbereich.

Anhand der nachfolgenden Beispiele und Figuren soll der erfindungsgemäße Gegenstand näher erläutern werden, ohne diesen auf die hier gezeigten speziellen Ausführungsformen einschränken zu wollen.

### Beispiel 1

In der nachfolgenden Tabelle 1 sind die Zusammensetzungen einer erfindungsgemäßen Mischung gegenüber zwei aus dem Stand der Technik bekannten Mischungen (bezeichnet als Vergleichsbeispiele 1 und 2) dargestellt.

**Tabelle 1**

| | Vergleichsbeispiel 1 | Vergleichsbeispiel 2 | Beispiel 1 |
|---|---|---|---|
| Polyamid Typ A | 70,8 | 70,8 | 70,8 |
| Polyamid Typ B | 8 | 8 | 8 |
| Mikrogel Typ A (nicht erfinderisch) | 20 | | |
| Mikrogel Typ B (nicht erfinderisch) | | 20 | |
| Mikrogel Typ C (erfinderisch) | | | 20 |
| Schwarz MB auf Basis PA12 | 1,2 | 1,2 | 1,2 |

Für die Herstellung der Mischungen wurden folgende Ausgangsstoffe eingesetzt:
Polyamid Typ A: Polyamid 12 mit nᵣₑₗ=2,11, NH2: 52 µeq/g, COOH: 15 µeq/g
Polyamid Typ B: Polyamid 12 mit ηᵣₑₗ=1,65, NH2: 105 µeq/g, COOH: 10 µeq/g

Mikrogel Typ A (nicht erfinderisch): Copolymer aus Butadien: 68,8 %, Acrylnitril: 26,7 %, HEMA: 1,5 %, TMPTMA: 3,0 %, hergestellt nach der Lehre von EP 1 152 030 A2; Polymerisationsumsatz: 99%; aufgearbeitet durch Koagulation mit wässriger Calciumchloridlösung, Trocknen und anschließendem Vermahlen mit Trennmittel Calciumcarbonat (zugesetzt beim Vermahlen - 5 Gew.-%, bezogen auf die Gesamtmasse aus Mikrogel und Trennmittel) (Figur 3)

Mikrogel B (nicht erfinderisch) und C (erfinderisch) wurden ausgehend von demselben Latex hergestellt. Die Herstellung des Latex erfolgte durch Copolymerisation der Monomeren Butadien und Acrylnitril im Gewichts-Verhältnis 62/38 und 0,37 Gew.-Teile tert.-Dodecylmercaptan (Phillips Petroleum Corp.)ohne Zusätze von Vernetzer und ohne Zusätze eines weiteren Monomers. Die Polymerisation wurde bei 30°C durch Zugabe von Ammoniumperoxodisulfat (0,025 Gew.-Teile) und Triethanolamin (0,018 Gew.-Teile) gestartet. Die Polymerisation erfolgte teiladiabatisch. Bei 45°C und einem Polymerisationsumsatz von 90% wurde mit 0,018 Gew.-Teile Ammoniumperoxodislufat nachaktiviert. Bei einem Polymermerisationsumsatz von 97 % wurde durch Zusatz von 0,08 Gew.-Teile Diethylhydroxylamin abgestoppt. Nach Entfernung der Restmonomeren und sonstiger flüchtiger Bestandteile durch Wasserdampfdestillation hatte der Latex hatte einen Feststoffgehalt von 48,5 Gew. %, einen pH-Wert von 10,6 und einen mittleren Teilchendurchmesser von 198 nm; der Gelgehalt und der Quellungsindex (jeweils bestimmt in Toluol) betrugen: 90,5 Gew.% und 7,6. Die Glastemperatur betrug -18°C und die Breite der Glasstufe 7°C. Vor der Aufarbeitung wurde der Latex mit 1,15 Gew. % Antioxydans Wingstay L (butyliertes Reaktionsprodukt von p-Kresol mit Dicyclopentadien der Firma Eliokem) versetzt

Mikrogel Typ B (nicht erfinderisch: aufgearbeitet durch Koagulation mit wässriger Calciumchloridlösung, Wäsche, Trocknen und anschliessendem Vermahlen unter Zusatz des Trennmittels Calciumcarbonat (5 Gew.-%, bezogen auf die Gesamtmasse aus Mikrogel und Trennmittel)(Figur 2)

Mikrogel Typ C (erfinderisch): Die Aufarbeitung des Latex erfolgte durch Sprühtrocknen unter Zusatz des Trennmittels Calciumcarbonat (5 Gew.-% bezogen auf die Gesamtmasse aus Mikrogel und Trennmittel) (Figur 1) (Kommerziell erhältliches Mikrogel Baymod N VPKA 8641 von Lanxess Deutschland GmbH).

Polyamid (a) und (c) sowie Mikrogel (b) wurden gemeinsam in den Einzug eines Doppelschnecken-Extruders (ZSK 30, Coperion) dosiert und bei Zylindertemperaturen von 200 bis 280 °C, einer Schneckendrehzahl von 180 U/min und einem Durchsatz von 12 kg/h compoundiert. Die an der Düse austretenden Stränge wurden im Wasserbad gekühlt und nachfolgend granuliert. Nach Trocknung bei 80 °C wurden die Formmassen zu Formteilen und Probekörpern verspritzt.

Die hergestellten Formmassen wurden wie folgt geprüft:
MVR: (Melt volume rate) bei 275 °C nach ISO 1133
SZ: Schlagzähigkeit und Kerbschlagzähigkeit nach ISO 179/1eU (Charpy)

Zug-E-Modul, Reißfestigkeit und Reißdehnung wurden nach ISO 527 an ISO-Zugstäben, Norm ISO/CD 3167, Typ A1, 170x20/10x4 mm bei einer Temperatur von 23 °C ermittelt. Die mechanischen Werte wurden in trockenem Zustand bestimmt.

Die relative Viskosität (ηᵣₑₗ) wurde bei 20 °C an einer 0,5 %igen m-Kresollösung nach der DIN EN ISO-Norm 307 bestimmt.

| | | Vgl.Bsp. 1 | Vgl.Bsp. 2 | P 12 (Typ A) | Bsp. 1 |
|---|---|---|---|---|---|
| MVR (275°C/5kg) | cm³/10min | 20 | n.m. | 27 | n.m. |
| MVR (275°C/21.6kg) | cm³/10min | 205 | 135 | n.b. | 165 |
| E-Modul | Mpa | 1110 | 1130 | 1600 | 1150 |
| Zugfestigkeit | Mpa | 39 | 41 | 45 | 45 |
| Reißdehnung | % | 210 | 240 | 230 | 250 |
| Schlagzähigkeit Charpy new, 23 °C | kJ/m² | o.B. | o.B. | o.B. | o.B. |
| Schlagzähgkeit Carpy new, -30 °C | kJ/m² | o.B. | o.B. | o.B. | o.B. |
| Kerbschlagzähigkeit Charpy new, 23 °C | kJ/m² | 90 | 80 | 8 | 100 |
| Kerbschlagzähigkeit Charpy new, -30 °C | kJ/m² | 12 | 11 | 6 | 15 |
| Ölquellung | Gew.-% | 3.6 | 2.1 | 1.1 | 1.8 |
| Halbwertszeit Hydrolysetest) | H | 115 | 210 | n.b. | 350 |

| | | | | | |
|---|---|---|---|---|---|
| n.b.: nicht bestimmt n.m.: nicht messbar o.B.: ohne Bruch | | | | | |

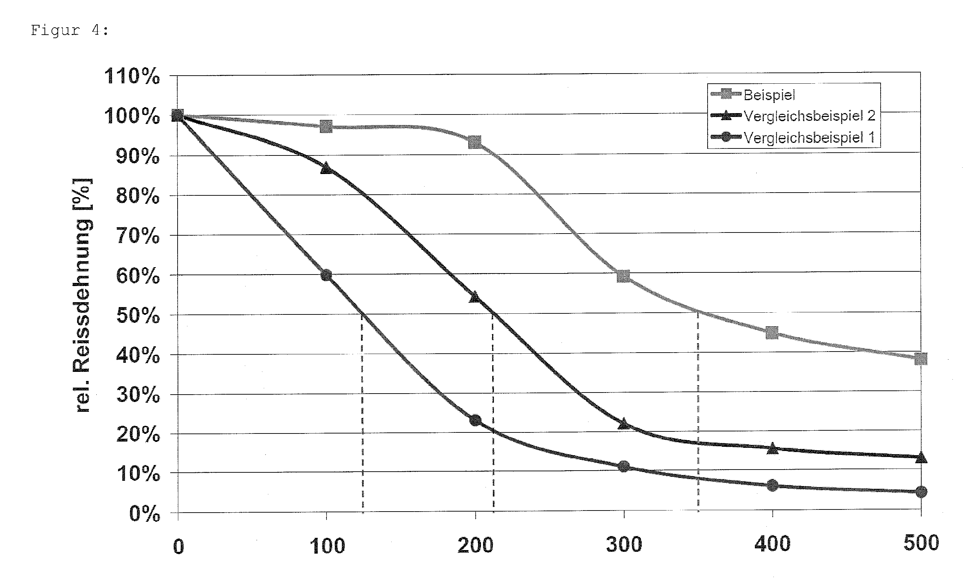

Zusätzlich wurde noch die Hydrolysebeständigkeit im Vergleich zu den Mischungen aus den Vergleichsbeispielen bestimmt. Hierzu erfolgte eine Lagerung in einem Wasser-Glykol-Gemisch mit einem Mischungsverhältnis von 60 zu 40 bei 135 °C und bei definierter Lagerungsdauer. Als Gykol wurde der kommerziell erhältliche Kühlmittelzusatz Havoline XLC eingesetzt. Für die Lagerung wurden Zugstäbe mit einer Dicke von 4 mm eingesetzt. In Fig. 4 ist zu erkennen, dass die erfindungsgemäße Mischung gegenüber den aus dem Stand der Technik bekannten Mischungen eine deutlich höhere verbleibende Reißdehnung (relativ zum Ausgangswert) aufweist. Durch Verwendung des erfindungsgemäß sprühgetrockneten Mikrogels konnte die Halbwertszeit im Hydrolysetest im Mittel verdoppelt werden.

## Patentansprüche

1. Polyamid-Elastomer-Mischung enthaltend
a) 30 bis 95 Gew.-% mindestens eines teilkristallinen Polyamids mit einer Lösungsviskosität größer oder gleich 1,75, gemessen in m-Kresol-Lösung, 0,5 Gew.-%, bei 20°C nach DIN EN ISO-Norm 307,
b) 5 bis 50 Gew.-% mindestens eines Elastomers, das durch Emulsionspolymerisation und anschließende Sprühtrocknung des bei der Emulsionspolymerisation erhaltenen Latex hergestellt wird,
c) gegebenenfalls 0 bis 20 Gew.-% eines oder mehrerer Polyamide mit einer Lösungsviskosität kleiner 1,75, gemessen in m-Kresol-Lösung, 0,5 Gew.-%, bei 20°C nach DIN EN ISO-Norm 307,
wobei sich die vorstehend genannten Gew.-%-Angaben auf die Gesamtmenge der Komponenten (a) bis (c) beziehen,
und, bezogen auf 100 Gew.-Teile der Komponenten (a) bis (c), 0 bis 100 Gewichtsteile eines oder mehrerer Additive,
**dadurch gekennzeichnet, dass** das Elastomer b) durch Emulsionspolymerisation von
b1) ≥ 55 Gew.-% mindestens eines konjugierten Diens,
b2) 5 bis 45 Gew.-% Acrylnitril,
b3) gegebenenfalls 0 bis 5 Gew.-% eines oder mehrerer polyfunktioneller radikalisch polymerisierbarer Monomere,
b4) gegebenenfalls 0 bis 20 Gew.-% eines oder mehrerer von b1) bis b3) verschiedener radikalisch polymerisierbarer Monomere,
hergestellt wird,
wobei sich die Gew.-%-Angaben auf die Gesamtmenge der Komponenten b1) bis b4) beziehen.

2. Polyamid-Elastomer-Mischung nach Anspruch 1,
**dadurch gekennzeichnet, dass** sie bezogen auf 100 Gew.-Teile des Elastomers b) 0 bis 10 Gew.-Teile eines oder mehrerer Trennmittel enthält.

3. Polyamid-Elastomer-Mischung nach einem der vorstehenden Ansprüche,
**dadurch gekennzeichnet, dass** das teilkristalline Polyamid (a) ausgewählt ist aus der Gruppe bestehend aus den Polyamiden PA46, PA6, PA66, PA69, PA610, PA612, PA614, PA616, PA618, PA11, PA12, PA1010, PA1012, PA1212, PA MXD6, PA MXD6/MXDI, PA9T, PA10T, PA12T, PA 6T/6I, PA 6T/66, PA 6T/10T, deren Copolyamiden sowie deren Blends und Polyamid-Blockcopolymeren mit Weichsegmenten auf Basis von Polyestern, Polyethern, Polysiloxanen oder Polyolefinen, wobei der Polyamidanteil der Polyamid-Blockcopolymeren mindestens 40 Gew.-% beträgt, und deren Blends.

4. Polyamid-Elastomer-Mischung nach einem der vorhergehenden Ansprüche,
**dadurch gekennzeichnet, dass** das teilkristalline Polyamid (a) eine Lösungsviskosität, gemessen in m-Kresol-Lösung, 0,5 Gew.-%, bei 20°C nach DIN EN ISO-Norm 307 im Bereich von 1,75 bis 2,4, insbesondere von 1,8 bis 2,3 aufweist.

5. Polyamid-Elastomer-Mischung nach einem der Ansprüche 1 bis 4,
**dadurch gekennzeichnet, dass** das konjugierte Dien (b1) ausgewählt ist aus der Gruppe bestehend aus Butadien, Isopren, 2-Chlorbutadien und 2,3-Dichlorbutadien.

6. Polyamid-Elastomer-Mischung nach einem der Ansprüche 1 bis 5,
**dadurch gekennzeichnet, dass** das von b1) bis b3) verschiedene radikalisch polymerisierbare Monomer b4) ausgewählt wird aus der Gruppe, die besteht aus: Styrol, Estern der Acryl- und Methacrylsäure, Hydroxylgruppen-haltigen (Meth)acrylaten, Tetrafluorethylen, Vinylidenfluorid, Hexafluorpropen, doppelbindungshaltigen Carbonsäuren, aminfunktionalisierten (Meth)acrylaten, Acrolein, N-Vinyl-2-pyrrolidon, 2-Vinyl-pyridin, 4-Vinyl-pyridin, N-Allyl-Harnstoff und N-Allyl-Thioharnstoff, (Meth)acrylamiden, und Mischungen hiervon.

7. Polyamid-Elastomer-Mischung Anspruch 6, wobei die Ester der Acryl- und Methacrylsäure ausgewählt werden aus Ethyl(meth)acrylat, Methyl(meth)acrylat, n-Propyl(meth)acrylat, n-Butyl(meth)acrylat, 2-Ethylhexyl(meth)acrylat.

8. Polyamid-Elastomer-Mischung nach Anspruch 6, wobei die Hydroxylgruppen-haltigen (Meth)acrylate ausgewählt werden aus Hydroxyethyl(meth)acrylat, Hydroxypropyl(meth)acrylat und Hydroxybutyl(meth)acrylat.

9. Polyamid-Elastomer-Mischung nach Anspruch 6, wobei die doppelbindungshaltigen Carbonsäuren ausgewählt werden aus Acrylsäure, Methacrylsäure, Maleinsäure, Fumarsäure, Itakonsäure.

10. Polyamid-Elastomer-Mischung nach Anspruch 6, wobei die aminofunktionalisierten (Meth)acrylate ausgewählt werden aus primären Aminoalkyl(meth)acrylsäureestern und sekundären Aminoalkyl(meth)acrylsäureestern.

11. Polyamid-Elastomer-Mischung nach Anspruch 10, wobei die primären Aminoalkyl(meth)acrylsäureester ausgewählt werden aus Aminoethyl(meth)acrylat, Aminopropyl(meth)acrylat und Aminobutyl(meth)acrylat.

12. Polyamid-Elastomer-Mischung nach Anspruch 10, wobei der sekundäre Aminoalkyl(meth)acrylsäureester tert.-Butylamino(C₂-C₄)alkyl(meth)acrylat ist.

13. Polyamid-Elastomer-Mischung nach Anspruch 6, wobei das Methacrylymid ausgewählt wird aus (Meth)acrylamid und einfach oder zweifach N-substituierten (Meth)acrylamiden.

14. Polyamid-Elastomer-Mischung nach einem der Ansprüche 1 bis 13,
**dadurch gekennzeichnet, dass** das polyfunktionelle radikalisch polymerisierbare Monomer (b3) ausgewählt wird aus:
zwei- oder mehrfach ungesättigten, radikalisch polymerisierbaren Monomeren, Verbindungen mit 2 bis 4 polymerisierbaren C=C-Doppelbindungen, sowie polyfunktionellen Acrylaten und Methacrylaten von mehrwertigen C₂- bis C₁₀-Alkohlen, sowie Mischungen hiervon.

15. Polyamid-Elastomer-Mischung nach Anspruch 14, wobei die Verbindung mit 2 bis 4 Doppelbindungen ausgewählt wird aus Diisopropenylbenzol, Divinylbenzol, Divinylether, Divinylsulfon, Diallylphthalat, Triallylcyanurat, Triallylisocyanurat, 1,2-Polybutadien, N,N'-m-Phenylenmaleimid, 2,4-Toluylenbis(maleimid), Triallyltrimellitat.

16. Polyamid-Elastomer-Mischung nach Anspruch 14, wobei die polyfunktionellen Acrylate und Methacrylate von mehrwertigen C₂ bis C₁₀-Alkoholen ausgewählt werden aus polyfunktionellen Acrylaten und Methacrylaten von Ethylenglykol, Propandiol-1,2, Butandiol-1,4, Hexandiol, Polyethylenglykol mit 2 bis 20 Oxyethyleneinheiten, Neopentylglykol, Bisphenol-A, Glycerin, Trimethylolpropan, Pentaerythrit, Sorbit mit ungesättigten Polyestern aus aliphatischen Di- und Polyolen.

17. Polyamid-Elastomer-Mischung nach einem der Ansprüche 1 bis 16,
**dadurch gekennzeichnet, dass** das Elastomer b) durch Vernetzung im Anschluss an die Emulsionspolymerisation in Gegenwart eines oder mehrerer Radikalstarter erhalten wird, ausgewählt aus der Gruppe bestehend aus: organischen Peroxiden, organischen Azoverbindungen, Di- und Polymercaptoverbindungen, und mercaptoterminierten Polysulfidkautschuken.

18. Polyamid-Elastomer-Mischung nach Anspruch 17, wobei die organischen Peroxide ausgewählt werden aus Dicumylperoxid, t-Butylcumylperoxid, Bis-(t-butylperoxyisopropyl)benzol, Di-t-butylperoxid, 2,5-Dimethylhexan-2,5-dihydroperoxid, 2,5-Dimethylhexin-3,2,5-dihydroperoxid, Dibenzoylperoxid, Bis-(2,4-dichlorobenzoyl)peroxid, t-Butylperbenzoat.

19. Polyamid-Elastomer-Mischung nach Anspruch 17, wobei die organischen Azoverbindungen ausgewählt werden aus Azo-bis-isobutyronitril und Azo-biscyclohexannitril.

20. Polyamid-Elastomer-Mischung nach Anspruch 17, wobei die Di- und Polymercaptoverbindungen ausgewählt werden aus Dimercaptoethan, 1,6-Diemrcaptohexan, 1,3,5-Trimercaptotriazin.

21. Polyamid-Elastomer-Mischung nach Anspruch 17, wobei die mercaptoterminierten Polysulfidkautschuke mercaptoterminierte Umsetzungsprodukte von Bis-Chlorethylformal mit Natriumpolysulfid sind.

22. Polyamid-Elastomer-Mischung nach einem der vorhergehenden Ansprüche 1 bis 21, **dadurch gekennzeichnet, dass** das Elastomer b) ohne Zusatz eines polyfunktionellen radikalisch polymerisierbaren Monomers b3) durch Polymerisation bei Temperaturen ≥ 10°C und Polymerisation bei Umsätzen ≥ 70 mol-%, bezogen auf die Gesamtmenge der eingesetzten Monomermischung, erhalten wird.

23. Polyamid-Elastomer-Mischung nach einem der Ansprüche 1 bis 22,
**dadurch gekennzeichnet, dass** die Menge des Acrylnitrils b2) im Elastomer b) im Bereich von 10 bis 40 Gew.-%, insbesondere im Bereich von 28 bis 35 Gew.-% liegt, bezogen auf die Menge der Komponenten (b1) bis (b3).

24. Polyamid-Elastomer-Mischung nach einem der vorhergehenden Ansprüche,
**dadurch gekennzeichnet, dass** 5 bis 40 Gew.-%, insbesondere 10 bis 30 Gew.-% des Elastomers (b) enthalten sind.

25. Polyamid-Elastomer-Mischung nach einem der vorhergehenden Ansprüche,
**dadurch gekennzeichnet, dass** die Polyamid-Elastomer-Mischung einen MVR (Melt volume rate) bei 275°C und einer Belastung von 21,6 kg im Bereich von 50 bis 200 cm³/10 min aufweist, gemessen nach DIN ISO 1133: 1991.

26. Formteil erhältlich aus einer Polyamid-Elastomer-Mischung nach einem der vorhergehenden Ansprüche.

27. Formteil nach Anspruch 26 in Form eines Kurbelwellengehäuses oder in Form von glatten, gewellten oder teilgewellten Mono- oder Mehrschichtleitungen, z.B. Kühlflüssigkeitsleitungen.

28. Verwendung der Polyamid-Elastomer-Mischung nach einem der Ansprüche 1 bis 25 zur Herstellung von mit wasser-, öl-, glykol-, methanol-, ethanol- und/oder kraftstoff-haltigen flüssigen Medien im Kontakt stehenden Formteilen im Automobilbereich.

## Claims

1. Polyamide-elastomer mixture comprising
a) 30 to 95 wt.-% of at least one partially crystalline polyamide having a solution viscosity greater than or equal to 1.75, measured in m-cresol solution, 0.5 wt.-% wt., at 20° C according to standard DIN EN ISO 307,
b) 5 to 50% wt.-% of at least one elastomer prepared by emulsion polymerization and subsequent spray drying of the latex obtained during emulsion polymerization,
c) optionally, 0 to 20 wt.-% of one or more polyamides having a solution viscosity of less than 1.75, measured in m-cresol solution, 0.5 wt.-%, at 20° C according to standard DIN EN ISO 307,
with the above-mentioned indications of wt.-% relating to the total amount of components (a) to (c),
and, relative to 100 parts by wt. of the components (a) to (c), from 0 to 100 parts by weight of one or more additives,
**characterized in that**
elastomer b) is prepared by emulsion polymerization of
b1) ≥ 55 wt.-% of at least one conjugated diene,
b2) 5 to 45 wt.-% acrylonitrile,
b3) optionally 0 to 5 wt.-% of one or more polyfunctional radically polymerizable monomers,
b4) optionally 0 to 20 wt.-% of one or more polyfunctional radically polymerizable monomers different from b1) to b3),
with the above-mentioned indications of wt.-% relating to the total amount of components b1) to b4).

2. Polyamide-elastomer mixture according to claim 1, **characterized in that** it contains 0 to 10 parts by wt. of one or more separating agents relative to 100 parts by wt. of the elastomer b).

3. Polyamide-elastomer mixture according to one of the preceding claims, **characterized in that** the partially crystalline polyamide (a) is selected from the group consisting of the polyamides PA46, PA6, PA66, PA69, PA610, PA612, PA614, PA616, PA618, PA11, PA12, PA1010, PA1012, PA1212, PA MXD6, PAMXD6/MXDI, PA9T, PA10T, PA12T, PA 6T/61, PA 6T/66, PA6T/10T, their copolyamides as well as their blends and polyamide block copolymers with soft segments based on polyesters, polyethers, poylsiloxanes or polyolefins, wherein the polyamide content of the polyamide block copolymers is at least 40 wt.-%, as well as their blends.

4. Polyamide-elastomer mixture according to one of the preceding claims, **characterized in that** the partially crystalline polyamide (a) has a solution viscosity, measured in m-cresol solution, 0.5 wt.-%, at 20° C according to standard DIN EN ISO 307, in the range of from 1.75 to 2.4, in particular of from 1.8 to 2.3.

5. Polyamide-elastomer mixture according to one of claims 1 to 4, **characterized in that** the conjugated diene (b1) is selected from the group consisting of butadiene, isoprene, 2-chlorobutadiene and 2,3-dichlorobutadiene.

6. Polyamide-elastomer mixture according to one of claims 1 to 5, **characterized in that** the radically polymerizable monomer b4) different from b1) to b3) is selected from the group consisting of:
styrene, esters of acrylic and methacrylic acid, hydroxyl-group-containing (meth)acrylates, tetrafluoroethylene, vinylidenefluoride, hexafluoropropene, double-bond-containing carboxylic acids, amine functionalized (meth)acrylates, acrolein, N-vinyl-2-pyrrolidone, 2-vinyl-pyridine, 4-vinyl-pyridine, N-allyl-urea and N-allyl-thiourea, (meth)acrylamides and mixtures thereof.

7. Polyamide-elastomer mixture according to claim 6, wherein the esters of acrylic and methacrylic acid are selected from ethyl(meth)acrylate, methyl(meth)acrylate, n-propyl(meth)acrylate, n-butyl(meth)acrylate, 2-ethylhexyl(meth)acrylate.

8. Polyamide-elastomer mixture according to claim 6, wherein the hydroxyl-group-containing (meth)acrylates are selected from hydroxyethyl(meth)acrylate, hydroxypropyl(meth)acrylate and hydroxybutyl(meth)acrylate.

9. Polyamide-elastomer mixture according to claim 6, wherein the double-bond-containing carboxylic acids are selected from acrylic acid, methacrylic acid, maleic acid, fumaric acid, itaconic acid.

10. Polyamide-elastomer mixture according to claim 6, wherein the amine functionalized (meth)acrylates are selected from primary aminoalkyl(meth)acrylic acid esters and secondary aminoalkyl(meth)acrylic acid esters.

11. Polyamide-elastomer mixture according to claim 10, wherein the primary aminoalkyl(meth)acrylic acid esters are selected from aminoethyl(meth)acrylate, aminopropyl(meth)acrylate and aminobutyl(meth)acrylate.

12. Polyamide-elastomer mixture according to claim 10, wherein the secondary aminoalkyl(meth)acrylic acid ester is tert-butylamino(C₂-C₄)alkyl(meth)acrylate.

13. Polyamide-elastomer mixture according to claim 6, wherein the (meth)acrylamide is selected from (meth)acrylamide and singly or doubly N-substituted (meth)acrylamides.

14. Polyamide-elastomer mixture according to one of claims 1 to 13, **characterized in that** the polyfunctional radically polymerizable monomer b3) is selected from: di- or polyunsaturated radically polymerizable monomers, compounds with 2 to 4 polymerizable C=C double bonds, and polyfunctional acrylates and methacrylates of C₂-to C₁₀-polyalcohols, and mixtures thereof.

15. Polyamide-elastomer mixture according to claim 14, wherein the compound with 2 to 4 polymerizable C=C double bonds is selected from diisopropenylbenzene, divinylbenzene, divinylether, divinylsulfone, diallylphthalate, triallylcyanurate, triallylisocyanurate, 1,2-polybutadiene, N,N'-m-phenylenemaleimide, 2,4-toluoylenebis(maleimide), triallyltrimellitate.

16. Polyamide-elastomer mixture according to claim 14, wherein the polyfunctional acrylates and methacrylates of C₂- to C₁₀-polyalcohols are selected from polyfunctional acrylates and methacrylate of ethylene glycol, propanediol-1,2, butanediol-1,4, hexanediol, polyethylene glycol with 2 to 20 oxyethylene units, neopentyl glycol, bisphenol-A, glycerin, trimethylolpropane, pentaerythritol, sorbitol with unsaturated polyesters from aliphatic di- and polyols.

17. Polyamide-elastomer mixture according to one of claims 1 to 16, **characterized in that** elastomer b) is obtained by cross-linking subsequent to the emulsion polymerization in the presence of one or more radical initiators, selected from the group consisting of: organic peroxides, organic azo compounds, and di- and polymercapto-compounds, and mercapto-terminated polysulfide rubbers.

18. Polyamide-elastomer mixture according to claim 17, wherein the organic peroxides are selected from dicumylperoxide, t-butyl-cumylperoxide, bis-(t-butylperoxyisopropyl)benzene, di-t-butylperoxide, 2,5-dimethylhexane-2,5-dihydroperoxide, 2,5-dimethylhexine-3,2,5-dihydroperoxide, dibenzoylperoxide, bis-(2,4-dichlorobenzoyl)peroxide, t-butylperbenzoate.

19. Polyamide-elastomer mixture according to claim 17, wherein the organic azo compounds are selected from azo-bis-isobutyronitrile and azo-bis-cyclohexanenitrile.

20. Polyamide-elastomer mixture according to claim 17, wherein the di- and polymercapto-compounds are selected from dimercaptoethane, 1,6-dimercaptohexane, 1,3,5-trimercaptotriazine.

21. Polyamide-elastomer mixture according to claim 17, wherein the mercapto-terminated polysulfide rubbers are mercapto terminated reaction products of bis-chloroethylformal with sodium polysulfide.

22. Polyamide-elastomer mixture according to one of the preceding claims 1 to 21, **characterized in that** elastomer b) is obtained without adding a polyfunctional radically polymerizable monomer b3) by polymerization at temperatures of ≥ 10° C and polymerization at conversions of ≥ 70 mol-%, relative to the total amount of the monomer mixture used.

23. Polyamide-elastomer mixture according to one of claims 1 to 22, **characterized in that** the amount of acrylonitrile b2) in the elastomer b) is in the range of from 10 to 40 wt.- %., particularly in the range of from 28 to 35 wt.-%, relative to the amount of components (b1) to (b3).

24. Polyamide-elastomer mixture according to one of the preceding claims, **characterized in that** 5 to 40 wt.-%, in particular 10 to 30 wt.-%, of elastomer (b) are contained therein.

25. Polyamide-elastomer mixture according to one of the preceding claims, **characterized in that** the polyamide-elastomer mixture has a MVR (melt volume rate), at 275° C and a load of 21.6 kg, in the range of from 50 to 200 cm³/10 min measured according to DIN ISO 1133: 1991.

26. Molded article obtainable from a polyamide-elastomer mixture according to one of the preceding claims.

27. Molded article according to claim 26 in the form of a crankcase or in the form of smooth, corrugated or partially corrugated mono- or multilayer pipes, e.g. cooling liquid pipes.

28. Use of the polyamide-elastomer mixture according to one of claims 1 to 25 for preparing molded articles in the automobile industry that are in contact with liquid media containing water, oil, glycol, methanol, ethanol and/or fuel.

## Revendications

1. Mélange polyamide-élastomère comprenant
a) 30 à 95 % en poids d'au moins un polyamide partiellement cristallin ayant une viscosité de la solution supérieure ou égal à 1,75, mesurée dans une solution de m-crésol, 0,5 % en poids à 20 °C selon la norme DIN EN ISO 307,
b) 5 à 50 % en poids d'au moins un élastomère qui est préparé par polymérisation en émulsion et une pulvérisation subséquente du latex obtenu par la polymérisation en émulsion,
c) optionnellement 0 à 20 % en poids d'un ou plusieurs polyamides ayant une viscosité de la solution inférieure à 1,75, mesurée dans une solution de m-crésol, 0,5 % en poids à 20 °C selon la norme DIN EN ISO 307,
dans lequel les indications des % en poids mentionnées ci-dessus se réfèrent à la quantité totale des composant (a) à (c)
et 0 à 100 parties en poids par rapport à 100 parties en poids des composants (a) à (c) d'un ou plusieurs additifs,
**caractérisé en ce que** l'élastomère b) est préparé par polymérisation en émulsion de
b1) ≥ 55 % en poids d'au moins un diène conjugué,
b2) 5 à 45 % en poids de l'acrylonitrile,
b3) optionnellement 0 à 5 % en poids d'un ou plusieurs monomères polyfonctionnels aptes à la polymérisation radicalaire,
b4) optionnellement 0 à 20 % en poids d'un ou plusieurs monomères polyfonctionnels aptes à la polymérisation radicalaire différents de b1) à b3),
dans lequel les indications des % en poids mentionnées ci-dessus se réfèrent à la quantité totale des composant b1) à b4).

2. Mélange polyamide-élastomère selon la revendication 1, **caractérisé en ce qu'**il comprend 0 à 10 parties en poids d'un ou plusieurs agents de séparation par rapport à 100 parties en poids de l'élastomère b).

3. Mélange polyamide-élastomère selon l'une des revendications précédentes, **caractérisé en ce que** le polyamide partiellement cristallin (a) est sélectionné parmi le groupe consistant en PA46, PA6, PA66, PA69, PA610, PA612, PA614, PA616, PA618, PA11, PA12, PA1010, PA1012, PA1212, PA MXD6, PA MXD6/MXDI, PA9T, PA10T, PA12T, PA 6T/6I, PA 6T/66, PA6T/10T, leurs copolyamides et leurs mélanges et des copolymère en bloc de polyamide avec des segment mou sur la base des polyesters, polyéthers, polysiloxanes ou polyoléfines, dans lequel la part du polyamide du copolymère en bloc de polyamide est au moins 40 % en poids et leurs mélanges.

4. Mélange polyamide-élastomère selon l'une des revendications précédentes, **caractérisé en ce que** le polyamide partiellement cristallin (a) a une viscosité de la solution dans la gamme de 1,75 à 2,4, particulièrement de 1,8 à 2,3, mesurée dans une solution de m-crésol, 0,5 % en poids à 20 °C selon la norme DIN EN ISO 307.

5. Mélange polyamide-élastomère selon l'une des revendications 1 à 4, **caractérisé en ce que** le diène conjugué (b1) est sélectionné parmi le groupe consistant en du butadiène, isoprène, 2-chlorobutadiène et 2,3-dichlorobutadiène.

6. Mélange polyamide-élastomère selon l'une des revendications 1 à 5, **caractérisé en ce que** le monomère b4) apte à la polymérisation radicalaire différent de b1) à b3) est sélectionné parmi le groupe consistant en :
du styrène, des esters de l'acide acrylique et méthacrylique, des (méth)acrylates contenant des groupes hydroxyle, tétrafluoroéthylène, vinylidènefluoride, hexafluoropropène, des acides carboxyliques contenant des doubles liaisons, des (méth)acrylates fonctionnalisés par des amines, acroléine, N-vinyl-2-pyrrolidone, 2-vinyl-pyridine, 4-vinyl-pyridine, N-allyl-urée et N-allyl-thio-urée, (méth)acrylamides et des mélanges de ceux-ci.

7. Mélange polyamide-élastomère selon la revendication 6, dans lequel les esters de l'acide acrylique et méthacrylique sont sélectionnés parmi de l'éthyl(méth)acrylate, méthyl(méth)acrylate, n-propyl(méth)acrylate, n-butyl(méth)acrylate, 2-éthylhexyl(méth)acrylate.

8. Mélange polyamide-élastomère selon la revendication 6, dans lequel les (méth)acrylates contenant des groupes hydroxyle sont sélectionnés parmi de l'hydoxyéthyl(méth)acrylate, hydroxypropyl(méth)acrylate et hydroxybutyl(méth)acrylate.

9. Mélange polyamide-élastomère selon la revendication 6, dans lequel les acides carboxyliques contenant des doubles liaisons sont sélectionnés parmi de l'acide acrylique, acide méthacrylique, acide maléique, acide fumarique, acide itaconique.

10. Mélange polyamide-élastomère selon la revendication 6, dans lequel les (méth)acrylates fonctionnalisés par des amines sont sélectionnés parmi des esters de l'acide aminoalkyl(méth)acrylique primaires et des esters de l'acide aminoalkyl(méth)acrylique secondaires.

11. Mélange polyamide-élastomère selon la revendication 10, dans lequel les esters de l'acide aminoalkyl(méth)acrylique primaires sont sélectionnés parmi aminoéthyl(méth)acrylate, aminopropyl(méth)acrylate et aminobutyl(méth)acrylate.

12. Mélange polyamide-élastomère selon la revendication 10, dans lequel l'ester de l'acide aminoalkyl(méth)acrylique secondaire est du tert-butylamino(C₂-C₄)alkyl(méth)acrylate.

13. Mélange polyamide-élastomère selon la revendication 6, dans lequel le méthacrylamide est sélectionné parmi (méth)acrylamide et des (méth)acrylamides qui sont N-substitués une ou deux fois.

14. Mélange polyamide-élastomère selon l'une des revendications 1 à 13, **caractérisé en ce que** le monomère polyfonctionnel apte à la polymérisation radicalaire b3) est sélectionné parmi :
des monomères di- ou polyinsaturés aptes à la polymérisation radicalaire, des composés avec 2 à 4 C=C doubles liaisons aptes à la polymérisation et des acrylates et des (méth)acrylates polyfonctionnels des C₂ à C₁₀ alcools polyvalents et des mélanges de ceux-ci.

15. Mélange polyamide-élastomère selon la revendication 14, dans lequel le composé avec 2 à 4 C=C doubles liaisons est sélectionné parmi du diisopropénylbenzène, divinylbenzène, divinyléther, divinylsulfone, diallylphtalate, triallylcyanurate, triallylisocyanurate, 1,2-polybutadiène, N,N'-m-phenylènemaléimide, 2,4-toluylènebis(maléimide), triallyltrimellitate.

16. Mélange polyamide-élastomère selon la revendication 14, dans lequel les acrylates et les (méth)acrylates polyfonctionnels des C₂ à C₁₀ alcools polyvalents sont sélectionnés parmi des acrylates er méthacrylates de l'éthylène glycol, propandiol-1,2, butandiol-1,4, hexandiol, polyéthylène glycole avec 2 à 20 unités de l'oxyéthylène, néopentyl glycol, bisphénol A, glycérine, triméthylolpropane, pentaérythrite, sorbitol avec des polyesters insaturés en di- et polyols.

17. Mélange polyamide-élastomère selon l'une des revendications 1 à 16, **caractérisé en ce que** l'élastomère b) est obtenu par la réticulation ensuite à la polymérisation en émulsion en présence d'un ou plusieurs amorceurs radicalaires sélectionnés parmi le groupe consistant en : des peroxydes organiques, des composés azoïques organiques, des composés de di- ou polymercapto et des caoutchoucs polysulfures terminés par mercapto.

18. Mélange polyamide-élastomère selon la revendication 17, dans lequel les peroxydes organiques sont sélectionnés parmi du dicumylperoxyde, t-butylcumylperoxyde, bis-(t-butylperoxy-isopropyl)benzène, di-t-butylperoxyde, 2,5-diméthylhexane-2,5-dihydroperoxyde, 2,5-diméthylhexin-3,2,5-dihydroperoxyde, dibenzoylperoxyde, bis-(2,4-dichlorobenzoyle)peroxyde, t-butylperbenzoate.

19. Mélange polyamide-élastomère selon la revendication 17, dans lequel les composés azoïques organiques sont sélectionnés parmi de l'azo-bis-isobutyronitrile et azo-bis-cyclohexannitrile.

20. Mélange polyamide-élastomère selon la revendication 17, dans lequel les composés de di- ou polymercapto sont sélectionnés parmi du dimercaptoéthane, 1,6-dimercaptohexane, 1,3,5-trimercaptotriazine.

21. Mélange polyamide-élastomère selon la revendication 17, dans lequel les caoutchoucs polysulfures terminés par mercapto sont des produits de réaction terminés par mercapto de bis-chloro-éthylformale avec du polysulfure de sodium.

22. Mélange polyamide-élastomère selon l'une des revendications 1 à 21, **caractérisé en ce que** l'élastomère b) est obtenu par polymérisation aux températures ≥ 10 °C et des conversions de polymérisation ≥ 70 mol-% par rapport à la quantité totale du mélange de monomère utilisé sans l'addition d'un monomère polyfonctionnel apte à la polymérisation radicalaire b3).

23. Mélange polyamide-élastomère selon l'une des revendications 1 à 22, **caractérisé en ce que** la quantité du acrylonitrile b2) dans l'élastomère b) est dans la gamme de 10 à 40 % en poids, particulièrement dans la gamme de 28 à 35 % en poids par rapport à la quantité des composé (b1) à (b3).

24. Mélange polyamide-élastomère selon l'une des revendications précédentes, **caractérisé en ce que** 5 à 40 % en poids, particulièrement 10 à 30 % en poids de l'élastomère (b) sont contenus.

25. Mélange polyamide-élastomère selon l'une des revendications précédentes, **caractérisé en ce que** le mélange polyamide-élastomère a un MVR (melt volume rate, indice de volume à l'état fondu) à 275 °C et une charge de 21,6 kg dans la gamme de 50 à 200 cm³/ 10 min mesuré selon DIN ISO 1133 :1991.

26. Article moulé susceptible d'être obtenu d'un mélange polyamide-élastomère selon l'une des revendications précédentes.

27. Article moulé selon la revendication 26 sous la forme d'un carter d'un vilebrequin ou sous la forme des fils mono- ou multicouche plats, annelés ou partiellement annelés, par exemples des fils du liquide de refroidissement.

28. Utilisation du mélange polyamide-élastomère selon l'une des revendications 1 à 25 pour la préparation des articles moulés dans le secteur de l'automobile en contact avec des médiums liquides contenant de l'eau, huile, glycol, méthanol, éthanol et /ou carburant.
